# EUROPÄISCHE PATENTANMELDUNG

(11) **EP 4 478 009 A2**
(43) Veröffentlichungstag der Anmeldung: **18.12.2024**
(21) Anmeldenummer: 24209898.6
(22) Anmeldetag: 22.09.2022
(51) Int. Cl.: G01F 25/10

(54) **PRÜFMODUL, PRÜFSYSTEM BZW. PRÜFANORDNUNG FÜR EIN BASISMODUL UND/ODER EINE MESSSYSTEMELEKTRONIK EINES MODULAREN VIBRONISCHEN MESSSYSTEMS**

(30) Priorität: 13.10.2021 DE 102021126587; 05.01.2022 DE 102022100234
(62) Teilanmeldung aus: 22786034.3
(71) Anmelder: Endress+Hauser Flowtec AG, 4153 Reinach (CH)
(72) Erfinder: Kirst, Michael, 79540 Lörrach (DE)
(74) Vertreter: Hahn, Christian

(57) **Zusammenfassung**

Das erfindungsgemäße Prüf-Modul (PM) dient dazu, in ein an eine Meßsystem-Elektronik (ME) elektrisch angeschlossenes Basis-Modul (M1) eines vibronischen Meßsystems eingesetzt und damit wieder lösbar mechanisch verbunden zu werden. Das Prüf-Modul (PM) umfaßt ein Trägerelement (41) sowie wenigstens ein mit dem Trägerelement (41) mechanisch verbundenes Prüfelement (42) zum Erzeugen und/oder Detektieren eines Magnetfelds. Mittels des Prüf-Moduls (PM) kann ferner ein Prüf-System bzw. eine Prüfanordnung für ein Basis-Modul (M1) und/oder eine daran elektrisch angeschlossene Meßsystem-Elektronik (ME) eines modularen vibronischen Meßsystems gebildet werden. Zudem kann das Prüf-Modul oder ein damit gebildetes ein Prüf-System bzw. eine damit gebildete Prüfanordnung auch zur Inbetriebnahme und/oder (Über-)Prüfung eines solchen modularen vibronischen Meßsystems verwendet werden.

## Beschreibung

Die Erfindung betrifft ein, beispielsweise auch dem Bilden eines Prüf-Systems bzw. einer Prüfanordnung dienliches, Prüf-Modul für ein Basis-Modul eines (modularen) vibronischen Meßsystems und/oder für eine an das Basis-Modul elektrisch angeschlossene Meßsystem-Elektronik des vibronischen Meßsystems, ein mittels eines solchen Prüf-Modul gebildetes Prüf-System bzw. eine mittels eines solchen Prüf-Systems gebildete Prüfanordnung für ein Basis-Modul und/oder eine Meßsystem-Elektronik eines (modularen) vibronischen Meßsystems. Zudem betrifft die Erfindung ein Verfahren zum Inbetriebnehmen und/oder (Über-)Prüfen eines (modularen) vibronischen Meßsystems mittels eines solchen Prüf-Moduls, eines solchen Prüf-Systems bzw. einer solchen Prüfanordnung.

Aus der DE-A 10 2019 134 606, der WO-A 2019/017891 oder der WO-A 2021121867 wie auch den (nicht vorveröffentlichten) deutschen Patentanmeldungen DE 102021105397.8, DE 102020133614.4, DE 102020132685.8, DE 102020133851.1, DE 102020133566.0, DE 102020132986.5, DE 102020132686.6, DE 102020132685.8, DE 102020131452.3, DE 102020132223.2, DE 102020127356.8, DE 102020114519.5 bzw. DE 102020112154.7 sind jeweils modulare, nämlich mittels eines Basis-Modul, eines mechanisch mit dem Basis-Modul verbundenen Vibronik-Moduls sowie einer an das Basis-Modul elektrisch angeschlossenen Meßsystem-Elektronik gebildete und dem Erfassen wenigstens einer Meßgröße eines in einer (Meßstoff-)Leitung strömenden fluiden Meßstoffs, nämlich dem Ermitteln von Meßwerte für eine oder mehrere Meßgrößen, beispielsweise einen Massestrom, einen Volumenstrom, eine Dichte und/oder eine Viskosität, des Meßstoffs dienliche (modulare) vibronische Meßsysteme bekannt.

Das Basis-Modul eines solchen (modularen) vibronischen Meßsystems weist ein (Schutz-)Gehäuse mit wenigstens einer von einer Gehäusewand zumindest teilweise umhüllten Kammer sowie eine oder mehrere, beispielsweise zylindrische und/oder als Luftspule ausgebildete, elektrische Spulen, die (voneinander beabstandet) innerhalb der Kammer des (Schutz-)Gehäuses plaziert und mit der Gehäusewand zumindest mittelbar mechanisch verbunden sind, auf. Jede der Spulen ist zudem elektrisch an die Meßsystem-Elektronik angeschlossen. Die Meßsystem-Elektronik kann zumindest teilweise innerhalb des (Schutz-)Gehäuses und/oder zumindest teilweise außerhalb des (Schutz-)Gehäuses, beispielsweise nämlich in einem separaten Elektronik-Gehäuse untergebracht sein. Das Basis-Modul ist im besonderen auch dafür eingerichtet, das Vibronik-Modul des Meßsystems aufzunehmen und damit (unter Bildung eines Meßwandlers vom Vibrationstyp) mechanisch fest, gleichwohl wieder lösbar verbunden zu werden, insb. nämlich unter Bildung des vibronischen Meßsystems selbst; dies insb. auch in der Weise, daß das Vibronik-Modul im des Basis-Moduls arretiert ist bzw. nicht beweglich ist.

Das Vibronik-Modul des jeweiligen Meßsystems wiederum ist zudem austauschbar ausgebildet, derart, daß es, insb. auch vor Ort, von außerhalb des (Schutz-)Gehäuses des Basis-Moduls bzw. durch eine in dessen Gehäusewand vorgesehene (Einschub-)Öffnung des Gehäuses in die Kammer eingebracht werden kann und daß es zerstörungsfrei, ggf. auch werkzeuglos aus dem Basis-Modul wieder ausgebaut werden kann, insb. nämlich von außerhalb des Gehäuses und/oder durch die (Einschub-)Öffnung des Gehäuses herausnehmbar ist bzw. ohne daß dafür das Basis-Modul selbst hantiert bzw. aus der (Prozeß-)Anlage ausgebaut werden müßte. Dadurch wird es u.a. auch ermöglicht, ein Vibronik-Modul nachträglich vor Ort, nämlich in ein bereits installiertes Basis-Modul einzusetzen bzw. ein defektes oder verschlissenes Vibronik-Modul vor Ort gegen ein intaktes neues, ggf. auch nur einmalig bzw. nur für einen vorgegebenen Zeitraum zu gebrauchendes ("disposable"), Vibronik-Modul vor Ort auszutauschen. Das Vibronik-Modul weist desweiteren jeweils einen oder mehrere, beispielsweise zylindrischen, Permanentmagneten auf und ist zudem dafür eingerichtet, so in das Basis-Modul eingebaut zu werden, daß jeder der Permanentmagnete innerhalb der vorbezeichneten Kammer plaziert, gleichwohl jeweils von der Gehäusewand beabstandet ist, dies im besonderen in der Weise, daß jeder der Permanentmagnete in einer bezüglich einer Ausrichtung und/oder eines kleinsten Abstandes zu einer der elektrischen Spulen des Basis-Moduls jeweils vorgegebenen statischen Einbauposition gehalten ist und daß eine jeweilige gedachte Längsachse jedes der Permanentmagnete und eine gedachte Längsachse zumindest einer der elektrischen Spulen miteinander fluchten bzw. in Verlängerung zueinander parallel verlaufen.

Bei den in Rede stehenden Meßsystemen weist jedes Vibronik-Modul ferner wenigstens ein, beispielsweise zumindest abschnittsweise gerades und/oder zumindest abschnittsweise gebogenes, (Meß-)Rohr mit einer eine äußere Mantelfläche des Rohrs bildenden Rohrwandung, insb. aus einem Metall oder einem Kunststoff, und mit einem von nämlicher Rohrwandung umhüllten Lumen, insb. nämlich zwei im wesentlichen baugleiche parallele (Meß-)Rohre, auf und ist jeder der vorbezeichneten Permanentmagnete außen an der Rohrwandung, insb. nämlich an einem sich zwischen einem ersten Segment-Ende und einem davon entfernten zweiten Segment-Ende erstreckenden Mittel-Segment der Rohrwandung, fixiert, insb. nämlich stoffschlüssig mit der Rohrwandung verbunden. Zudem ist das Vibronik-Modul bzw. dessen wenigstens eines (Meß-)Rohr so ausgestaltet, ggf. auch werkzeuglos so in das Gehäuse eingebaut zu werden, daß das Rohr zumindest teilweise, insb. vollständig, innerhalb der Kammer plaziert, gleichwohl von der Gehäusewand beabstandet ist und daß jeder der Permanentmagnete in der jeweiligen Einbauposition zusammen mit der jeweiligen elektrischen Spule eine, insb. als elektrodynamischer Schwingungserreger dienliche, Schwingspule und/oder eine, insb. als elektrodynamischer Schwingungssensor dienliche, Tauchspule bilden. Im Falle eines zumindest abschnittsweise gebogenen (Meß-)Rohrs kann das vorbezeichnete Mittel-Segment beispielsweise im wesentlichen U-förmig oder V-förmig ausgebildet sein. In einem solchen vibronischen Meßsystem ist jedes der vorbezeichneten (Meß-)Rohre zudem jeweils eingerichtet, im Betrieb innerhalb des Lumens einen, insb. mit einer vorgebbaren und/oder vom ersten Segment-Ende zum zweiten Segment-Ende weisenden Strömungsrichtung, strömenden fluiden Meßstoff zu führen und währenddessen vibrieren gelassen zu werden, um mit einer oder mehreren Meßgrößen des Meßstoffs korrelierte Meßeffekte zu generieren, insb. derart, daß das Mittel-Segment Schwingungsbewegungen um eine statische Ruhelage ausführt und/oder daß das (Meß-)Rohr mittels wenigstens einer der vorbezeichneten, (bestromten) Schwingspulen angetrieben wird und/oder daß mittels der vorbezeichneten Tauchspulen jeweils eine Schwingungsbewegungen des wenigstens einen Rohrs repräsentierende, mithin als Schwingungssignal dienliche (Wechsel-)Spannung generiert wird. Die Meßsystem-Elektronik eines solchen Meßsystems wiederum ist dementsprechend dafür eingerichtet, mittels eines elektrischen Treibersignals, insb. mit einem eingeprägten Wechselstrom und/oder einer im wesentlichen einer Resonanzfrequenz des wenigstens Rohrs entsprechenden eingeprägten (Wechselstrom-)Frequenz, elektrische Leistung in die die vorbezeichnete Schwingspule bildenden wenigstens eine elektrische Spule einzuspeisen und/oder anhand der von der die vorbezeichnete Tauchspule bildenden wenigstens einen elektrischen Spule generierten (Wechsel-)Spannung Meßwerte für die eine oder mehrere zu erfassenden Meßgrößen des durch das (Meß-)Rohr bzw. die Rohre strömenden Meßstoffs zu ermitteln, im Falle eines als Coriolis-Massedurchfluß-Meßgerät bzw. als Coriolis-Massedurchfluß-/Dichte-Meßgerät ausgebildeten Meßsystems beispielsweise nämlich anhand einer durch Corioliskräfte im durch das schwingende Rohr strömenden Meßstoff bewirkten (Meß-)Phasendifferenz zwischen zwei der vorbezeichneten Schwingungssignalen sowie einer in der Meßsystem-Elektronik eingerichteten Phasendifferenz-zu-Meßwert-Kennlinienfunktion den Massenstrom repräsentierende (Massenstrom-)Meßwerte zu generieren. Bei der Phasendifferenz-zu-Massenstrom-Meßwert-Kennlinienfunktion kann sich beispielsweise um eine (lineare) Parameterfunktion mit einem (Skalen-)Nullpunkt, der einer bei ruhendem Meßstoff bzw. einem Massestrom von Null meßbaren (Meß-)Phasendifferenz der beiden Schwingungssignale entspricht, und mit einer Steigung, die einer (Meß-)Empfindlichkeit des Meßsystems bzw. einer auf eine Änderung des Massenstroms bezogene Änderung der (Meß-)Phasendifferenz entspricht, handeln. Da eine oder mehrere Resonanzfrequenzen des wenigstens einen Rohrs insbesondere auch von der momentanen Dichte des jeweiligen Meßstoffs abhängig sind, kann mittels eines solchen Meßsystems neben dem Massestrom zusätzlich auch die Dichte vom jeweils hindurch strömenden Meßstoff anhand der (Wechselstrom-)Frequenz des Treibersignals und/oder anhand einer (Signal-)Frequenz wenigstens eines der Schwingungssignale direkt gemessen werden. Dementsprechend ist die Meßsystem-Elektronik von Meßsystemen der in Rede stehenden Art typischerweise ferner auch eingerichtet, anhand der vorbezeichneten (Wechselstrom-)Frequenz des Treibersignals und/oder anhand einer dementsprechenden Signalfrequenz wenigstens eines der Schwingungssignale die Dichte repräsentierende (Dichte-)Meßwerte zu generieren, beispielsweise unter Verwendung einer in der Meßsystem-Elektronik entsprechend eingerichteten Nutzfrequenz-zu-Meßwert-Kennlinienfunktion. Darüberhinaus ist es auch möglich, mittels vibronischer Meßsysteme der in Rede stehenden Art die Viskosität des hindurchströmenden Meßstoffs direkt zu messen, beispielsweise basierend auf einer für die Aufrechterhaltung der Nutzschwingungen erforderlichen Erregerenergie bzw. Erregerleistung und/oder basierend auf einer aus einer Dissipation von Schwingungsenergie resultierenden Dämpfung der angeregten (Resonanz-)Schwingungen bzw. unter Verwendung einer in der Meßsystem-Elektronik entsprechend eingerichteten Dämpfung-zu-Meßwert-Kennlinienfunktion. Darüberhinaus können aus den vorgenannten Strömungs- und/oder Stoffparametern weitere abgeleitete Meßgrößen, wie etwa die Reynoldszahl mittels solcher vibronischer Meßsysteme ohne weiteres zu ermittelt werden.

Zur Vereinfachung der Inbetriebnahme eines so gebildeten Meßsystems kann das Vibronik-Modul ferner wenigstens ein das Vibronik-Modul betreffende bzw. identifizierende Informationen tragendes Identifizierelement, beispielsweise ein am wenigstens einen Rohr angebrachtes Barcode-, QR-Code- bzw. Funk-Etikett (RFID-TAG), aufweisen und/oder kann das Basis-Modul wenigstens ein innerhalb des (Schutz-)Gehäuses positioniertes und an die Meßsystem-Elektronik angeschlossenes Licht emittierendes Halbleiterelement, beispielsweise eine Leuchtdiode (LED), und/oder einen oder mehrere, jeweils innerhalb des (Schutz-)Gehäuses positionierte und an die Meßsystem-Elektronik angeschlossene Funk-Sender/Empfänger (RF-Transceiver) und/oder Fotosensoren, beispielsweise nämlich einen oder mehrere CCD-Fotosensoren und/oder einen oder mehrere CMOS-Fotosensoren, aufweisen.

Vibronische Meßsysteme der in Rede stehenden Art sind regelmäßig auch auf deren Funktionstüchtigkeit bzw. allfällige Abweichungen von einem jeweiligen vorab ermittelten, beispielsweise nämlich im vom Hersteller bzw. im Herstellerwerk festgelegten und/oder bei einer bei einer Kalibrierung bzw. Inbetriebnahme des jeweiligen Meßsystems vor Ort festgestellten Referenzzustand hin zu überprüfen, beispielsweise um mit erhöhten Abweichungen vom Referenzzustand einhergehende Reduzierungen der Funktionstüchtigkeit bzw. einer Meßgenauigkeit des Meßsystems, mit der dieses die zu erfassenden Meßgröße, nicht zuletzt auch den Massenstrom und die Dichte, in die entsprechenden Meßwerte schlußendlich abbildet, möglichst frühzeitig detektieren können. Derartige Reduzierungen der Funktionstüchtigkeit bzw. Meßgenauigkeit eines solchen Meßsystems können beispielsweise in Form von zumeist irreversiblen Veränderungen einer elektrische Impedanz der vorbezeichneten Schwing- und/oder Tauchspulen und/oder einer dauerhaft verminderten Stabilität der mechanischen Verbindung zwischen Basis- und Vibronik-Modul bzw. einer Präzision der Positionierung des Vibronik-Moduls im Basis-Modul auftreten bzw. können beispielsweise durch thermische und/oder mechanische Überbelastungen, etwa infolge von sehr hohen oder sehr niedrigen Temperaturen innerhalb des Basis-Moduls, durch Alterung, durch innerhalb des Basis-Modul auftretende erhöhte bzw. kondensierende Feuchtigkeit und/oder durch durch häufiges Auswechseln von Vibronik-Modulen bedingten Verschleiß von Komponenten des Basis-Moduls verursacht sein. Als weitere, die Funktionstüchtigkeit des Meßsystems zumindest indirekt und/oder zumindest vorübergehend beeinträchtigende Einflußfaktoren sind darüberhinaus auch sich innerhalb des Basis-Moduls ausbreitende multi- und/oder hoch-frequente elektromagnetische (Fremd-)Strahlungen bzw. -felder (EMV) oder sich innerhalb des Basis-Moduls, beispielsweise in Form von Körperschall, ausbreitende (Fremd-)Schallwellen zu nennen.

Infolgedessen ist regelmäßig davon auszugehen, daß auch eine oder mehrere von dem Meßsystem jeweils immanenten Systemfunktionen (Übertragungsfunktionen), von denen jede jeweils eine funktionelle Abhängigkeit der vorbezeichneten Schwingungssignale vom jeweiligen Treibersignal bzw. eine oder mehrere funktionelle Abhängigkeiten der Schwingungssignale von dem Treibersignal und den jeweiligen Strömungs- und/oder Stoffparametern des Meßstoffs, charakterisiert, im Vergleich zu einer dem jeweiligen ursprünglichen Meßwandler immanenten (Referenz-)Systemfunktion verändert ist. Als Beispiel für derartige Systemfunktionen des Meßsystems ist u.a. eine Massenstrom-zu-Phasendifferenz-Systemfunktion, gemäß der die vorbezeichnete (Meß-)Phasendifferenz der Schwingungssignale vom Massenstrom abhängig ist, oder eine Dichte-zu-Resonanzfrequenz-Systemfunktion des Meßwandlers, gemäß der eine oder mehrere Resonanzfrequenzen des wenigstens einen Rohrs von der Dichte des Meßstoffs abhängig sind, zu nennen. Gleichermaßen betroffen von solchen (Über-)Belastungen des Meßwandlers sind dementsprechend auch die vorbezeichneten Systemfunktionen involvierende Meßfunktionen des Meßsystems, gemäß der das Meßsystem insgesamt die jeweils zu erfassenden Meßgröße in die jeweiligen Meßwerte konvertiert, beispielsweise eine aus der vorbezeichneten Massenstrom-zu-Phasendifferenz-Systemfunktion und einer Phasendifferenz-zu-Massenstrom-Meßwert-Kennlinienfunktion, nämlich einer in der Meßsystem-Elektronik implementierten Kennlinienfunktion, gemäß der damit eine ermittelte Phasendifferenz in Massenstrom-Meßwerte umgerechnet werden, zusammengesetzte Massenstrom-zu-Meßwert-Meßfunktion des Meßsystems, gemäß der damit ermittelte Massenstrom-Meßwerte vom Massenstrom abhängig sind. Bei der Phasendifferenz-zu-Massenstrom-Meßwert-Kennlinienfunktion kann sich beispielsweise um eine (lineare) Parameterfunktion mit einem einer bei ruhendem Meßstoff gemessenen (Meß-)Phasendifferenz entsprechenden (Skalen-)Nullpunkt und einer (Meß-)Empfindlichkeit, die einer auf eine Änderung des Massenstroms bezogene Änderung der (Meß-)Phasendifferenz entspricht (Steigung der Kennlinienfunktion), handeln. Als weitere Beispiele für solche, potentiell ebenfalls von Störungen betroffenen Systemfunktionen bzw. damit gebildete Meßfunktionen können u.a. auch eine Dichte-zu-Resonanzfrequenz- Systemfunktion des Meßwandlers bzw. eine diese sowie eine Resonanzfrequenz-zu-Dichte-Meßwert-Kennlinienfunktion der Meßsystem-Elektronik involvierende Dichte-zu-Meßwert-(Meß-)Funktion des Meßsystems und/oder eine Viskosität-zu-Dämpfung-Systemfunktion des Meßwandlers bzw. eine dies sowie eine Dämpfung-zu Viskosität-Meßwert-Kennlinienfunktion der Meßsystem-Elektronik involvierende Viskosität-zu-Meßwert-(Meß-)Funktion des Meßsystems genannt werden. Die Änderung der jeweiligen Systemfunktion kann sich dementsprechend beispielsweise als eine Drift eines oder mehrerer der jeweiligen Kennlinienparameter eine oder mehrerer der vorbezeichneten Kennlinienfunktionen, im Falle einer linearen Parameterfunktion beispielsweise von deren Nullpunkt und/oder deren Steigung, auswirken. Die vorbezeichneten, ggf. auch irreversiblen Änderungen einer oder mehrerer der System- bzw. Meßfunktionen des Meßsystems können gelegentlich auch dazu führen, daß das Meßsystem insgesamt soweit fehlerhaft arbeitet, daß eine für solche Meßsysteme typischerweise angestrebte hohe Meßgenauigkeit nicht mehr gewährleistet ist, mithin eine Funktionstüchtigkeit des Meßsystems in erheblichem Maße beeinträchtigt, ggf. sogar ausgesetzt ist bzw. eine dementsprechend kritische Störung des betroffenen Meßsystems vorliegt.

Dem Rechnung tragend werden Meßsysteme der in Rede stehenden Art typischerweise entsprechenden (Nach-)Prüfungen unterzogen, beispielsweise regelmäßig wiederkehrend im Zuge einer turnusmäßigen vorausschauenden Instandhaltung; dies insb. auch derart, daß vor Ort die Funktionsfähigkeit des Vibronik-Moduls bzw. des gesamten Meßsystems im Zuge einer zeitgesteuert durchgeführten und/oder durch an die Meßsystem-Elektronik übermittelte dementsprechend Steuerkommandos ausgelösten (Selbst-)Diagnose mittels des Meßsystems überprüft wird, etwa um bei Bedarf, nicht zuletzt nämlich bei Detektion des Vorliegens einer Störung des Meßsystems möglichst rasch entsprechende Reparatur- bzw. Ersatzmaßnahmen einleiten zu können. Bei einem vibronischen Meßsystem der in Rede stehenden Art umfaßt eine solche (Reparatur- bzw. Ersatz-)Maßnahme regelmäßig einen auch vor Ort einfach und schnell durchzuführenden Austausch des defekten Vibronik-Moduls gegen ein neues Vibronik-Modul. Ein Nachteil bei einem derartigen Prüfverfahren ist u.a. allerdings darin zu sehen, daß damit lediglich die Funktionsfähigkeit des Meßsystems insgesamt verifizierbar ist bzw. daß umgekehrt eine allfällig detektierte Störung nicht ohne weiteres innerhalb des Meßsystems exakt lokalisiert, nämlich dem Basis-Modul, dem Vibronik-Modul oder der Meßsystem-Elektronik entsprechend zugeordnet werden kann. Im besonderen ist es mit einer derartigen (Selbst-)Diagnose nicht ohne weiteres möglich, auch lediglich die Meßgenauigkeit beeinträchtigende Störungen des Basis-Moduls bzw. der daran elektrisch angeschlossenen Meßsystem-Elektronik entsprechend zu identifizieren, derart, daß im Zuge einer solchen Überprüfung eines Meßsystems der in Rede stehenden Art auch ein Bedarf eines Austausches des Basis-Moduls und/oder der Meßsystem-Elektronik ermittelt werden kann.

Ausgehend vom vorbezeichneten Stand der Technik besteht eine Aufgabe der Erfindung darin, die Überprüfung von modularen vibronischen Meßsystemen dahingehend zu verbessern, daß damit allfällige Störungen bzw. Defekte des Basis-Moduls und/oder der Meßsystem-Elektronik, nicht zuletzt auch von die Meßgenauigkeit des Meßsystems insgesamt herabsetzenden Verschleiß- bzw. Alterungserscheinungen des Basis-Moduls bzw. der Meßsystem-Elektronik, möglichst frühzeitig und zuverlässig detektiert, ggf. auch vermeldet werden können.

Zur Lösung der Aufgabe besteht die Erfindung in einem, beispielsweise auch dem Bilden eines Prüf-Systems bzw. einer Prüfanordnung dienlichen, Prüf-Modul für ein Basis-Modul eines (modularen) vibronischen Meßsystems, insb. eines modularen Coriolis-Massestrom-Meßgeräts, und/oder für eine an das Basis-Modul elektrisch angeschlossene Meßsystem-Elektronik des vibronischen Meßsystems bzw. darin, ein solches Prüf-Modul zum Überprüfen eines Basis-Modul eines vibronischen Meßsystems, insb. eines modularen Coriolis-Massestrom-Meßgeräts, und/oder einer an das Basis-Modul elektrisch angeschlossenen, insb. modularen, Meßsystem-Elektronik des vibronischen Meßsystems zu verwenden. Das Prüf-Modul umfaßt erfindungsgemäß ein, beispielsweise monolithisches und/oder plattenförmiges, Trägerelement, beispielsweise aus Metall und/oder Kunststoff, sowie wenigstens ein mit dem Trägerelement mechanisch verbundenes, beispielsweise nämlich elektrisches und/oder magnetisches und/oder elektronisches, erstes Prüfelement, beispielsweise nämlich eine elektrische Spule und/oder ein Permanentmagnet, zum Erzeugen und/oder Detektieren eines Magnetfelds. Zudem ist das erfindungsgemäße Prüf-Modul eingerichtet, in das Basis-Modul eingesetzt und damit wieder lösbar mechanisch verbunden zu werden, insb. derart, daß das Prüf-Modul im Basis-Modul arretiert bzw. nicht beweglich ist und/oder daß das erste Prüfelement innerhalb des Basis-Moduls an einer ersten vorgegebenen Prüfposition gehalten ist.

Ferner besteht die Erfindung auch in einem mittels eines erfindungsgemäßen Prüf-Moduls sowie einer an nämliches Prüf-Modul bzw. an dessen erstes Prüfelement elektrisch angeschlossenen, beispielsweise auch modularen, Prüfsystem-Elektronik gebildeten, beispielsweise auch dem Bilden einer Prüfanordnung dienlichen, Prüfsystem zum Überprüfen eines Basis-Moduls eines (modularen) vibronischen Meßsystems, beispielsweise nämlich eines modularen Coriolis-Massestrom-Meßgeräts, und/oder einer an das Basis-Modul elektrisch angeschlossenen, beispielsweise auch modularen, Meßsystem-Elektronik des vibronischen Meßsystems bzw. besteht die Erfindung auch darin, ein solches Prüfsystem zum Überprüfen eines Basis-Moduls eines (modularen) vibronischen Meßsystems, insb. eines modularen Coriolis-Massestrom-Meßgeräts, und/oder einer an das Basis-Modul elektrisch angeschlossenen, insb. modularen, Meßsystem-Elektronik des vibronischen Meßsystems zu verwenden.

Weiterhin besteht die Erfindung ferner auch in einer mittels eines solchen Prüfsystems gebildeten Prüfanordnung für ein Basis-Modul sowie eine Meßsystem-Elektronik eines (modularen) vibronischen Meßsystems, beispielsweise eines modularen Coriolis-Massestrom-Meßgeräts, wobei das Basis-Modul ein (Schutz-)Gehäuse mit wenigstens einer von einer Gehäusewand zumindest teilweise umhüllten Kammer sowie wenigstens eine innerhalb der Kammer des (Schutz-)Gehäuses plazierte, beispielsweise zylindrische, (erste) elektrische Spule, die mit der Gehäusewand zumindest mittelbar mechanisch verbunden ist, aufweist, und wobei das Prüf-Modul in das Basis-Modul eingesetzt ist und damit mechanisch fest, gleichwohl wieder lösbar verbunden ist, derart, daß das Trägerelement und das erste Prüfelement innerhalb der Kammer plaziert sind, beispielsweise auch derart, daß das Prüf-Modul im Basis-Modul arretiert ist bzw. nicht beweglich ist und/oder daß das erste Prüfelement an einer bezüglich einer Ausrichtung und/oder eines kleinsten Abstandes zur ersten elektrische Spule vorgegebenen ersten Prüfposition gehalten ist.

Darüberhinaus besteht die Erfindung auch in einem Verfahren zum Inbetriebnehmen und/oder (Über-)Prüfen eines (modularen) vibronischen Meßsystems, beispielsweise eines modularen Coriolis-Massestrom-Meßgeräts, wobei das Meßsystem ein Basis-Modul, das ein (Schutz-)Gehäuse mit wenigstens einer von einer Gehäusewand zumindest teilweise umhüllten Kammer sowie wenigstens eine innerhalb der Kammer des (Schutz-)Gehäuses plazierte, beispielsweise zylindrische und/oder als Luftspule ausgebildete, erste elektrische Spule, die mit der Gehäusewand zumindest mittelbar mechanisch verbunden sowie elektrisch an die Meßsystem-Elektronik angeschlossene ist, aufweist, sowie ein Vibronik-Modul umfaßt und wobei das Basis-Modul eingerichtet ist, das Vibronik-Modul aufzunehmen und damit mechanisch fest, gleichwohl wieder lösbar verbunden zu werden, beispielsweise nämlich unter Bildung eines Meßaufnehmers vom Vibrationstyp bzw. eines vibronischen Meßsystems und/oder derart, daß das Vibronik-Modul innerhalb des Basis-Moduls arretiert ist bzw. nicht beweglich ist, bei welchem Verfahren das Prüf-Modul bzw. Prüf-System verwendet wird um die Prüfanordnung zu bilden und um das Basis-Modul und/oder die Meßsystem-Elektronik mittels des Prüf-Moduls bzw. des Prüfsystems zu überprüfen, beispielsweise durch Vergleichen wenigstens eines mittels der Prüfsystem-Elektronik ermittelten Meßwerts und/oder wenigstens eines mittels der Meßsystem-Elektronik ermittelten Meßwerts mit einem jeweils zugehörigen Referenzwert und/oder wenigstens einem dafür vorgegebenen Schwellenwert. Beim erfindungsgemäßen Verfahren wird zudem das Prüf-Modul aus dem Basis-Modul auch wieder entfernt und hernach ein Vibronik-Modul in das Basis-Modul zum Bilden eines Meßaufnehmers vom Vibrationstyp bzw. des vibronischen Meßsystems eingesetzt.

Nach einer ersten Ausgestaltung des Prüf-Moduls der Erfindung ist das Prüf-Modul ferner eingerichtet, derart in das Basis-Modul eingesetzt und damit wieder lösbar mechanisch verbunden zu werden, daß das erste Prüfelement an einer, insb. bezüglich einer Ausrichtung und/oder eines kleinsten Abstandes einer elektrischen Spule des Basis-Moduls vorgegebenen, ersten Prüfposition gehalten ist, beispielsweise auch derart, daß eine gedachte Längsachse des ersten Prüfelements und eine gedachte Längsachse einer elektrischen Spule des Basis-Moduls miteinander fluchten bzw. in Verlängerung zueinander parallel verlaufen.

Nach einer zweiten Ausgestaltung des Prüf-Moduls der Erfindung ist ferner vorgesehen, daß das erste Prüfelement eine, insb. zylindrische und/oder als Luftspule ausgebildete, elektrische Spule aufweist.

Nach einer dritten Ausgestaltung des Prüf-Moduls der Erfindung ist ferner vorgesehen, daß das erste Prüfelement einen Permanentmagneten aufweist.

Nach einer vierten Ausgestaltung des Prüf-Moduls der Erfindung ist ferner vorgesehen, daß das erste Prüfelement einen Hall-Sensor, insb. einen CMOS-Hall-Sensor, aufweist.

Nach einer fünften Ausgestaltung des Prüf-Moduls der Erfindung ist ferner vorgesehen, daß das Trägerelement zumindest teilweise aus einem, beispielsweise auch chemisch beständigen und/oder hochfesten, Kunststoff, wie z.B. einem Polycarbonat (PC) oder einem PolyEtherEtherKeton (PEEK), hergestellt ist, beispielsweise nämlich eine aus Kunststoff hergestellte äußere Schutzschicht aufweist. Diese Ausgestaltung der Erfindung weiterbildend ist ferner vorgesehen, daß zumindest das erste Prüfelement zumindest teilweise, ggf. auch nämlich vollständig, in den Kunststoff eingebettet ist.

Nach einer sechsten Ausgestaltung des Prüf-Moduls der Erfindung ist ferner vorgesehen, daß das Basis-Modul ein (Schutz-)Gehäuse mit wenigstens einer von einer Gehäusewand zumindest teilweise umhüllten Kammer sowie wenigstens eine innerhalb der Kammer des (Schutz-)Gehäuses plazierte, beispielsweise auch zylindrische und/oder elektrisch an die Meßsystem-Elektronik angeschlossene, erste elektrische Spule, die mit der Gehäusewand zumindest mittelbar mechanisch verbunden ist, aufweist, und daß das Prüf-Modul eingerichtet ist, derart in das Basis-Modul eingesetzt und damit wieder lösbar mechanisch verbunden zu werden, daß das Trägerelement und das erste Prüfelement innerhalb der Kammer plaziert sind, beispielsweise auch derart, daß das erste Prüfelement an einer bezüglich einer Ausrichtung und/oder eines kleinsten Abstandes zur ersten elektrische Spule vorgegebenen ersten Prüfposition gehalten ist, und/oder daß eine gedachte Längsachse des ersten Prüfelements und eine gedachte Längsachse der ersten elektrischen Spule miteinander fluchten bzw. in Verlängerung zueinander parallel verlaufen. Diese Ausgestaltung der Erfindung weiterbildend ist ferner vorgesehen, daß das Basis-Modul wenigstens eine innerhalb der Kammer des (Schutz-)Gehäuses plazierte, beispielsweise auch zylindrische und/oder zur ersten elektrischen Spule baugleiche, zweite elektrische Spule aufweist, die mit der Gehäusewand zumindest mittelbar mechanisch verbunden ist, beispielsweise nämlich auch entfernt von der ersten elektrischen Spule positioniert ist. Darüberhinaus kann das Basis-Modul weiters wenigstens eine innerhalb der Kammer des (Schutz-)Gehäuses plazierte, beispielsweise zylindrische und/oder zur ersten und/oder zweiten elektrischen Spule baugleiche, dritte elektrische Spule aufweisen, die mit der Gehäusewand zumindest mittelbar mechanisch verbunden ist, beispielsweise entfernt von den ersten und zweiten elektrischen Spule positioniert ist.

Nach einer siebenten Ausgestaltung des Prüf-Moduls der Erfindung ist ferner vorgesehen, daß das erste Prüfelement eingerichtet ist, mittels eines mit dem ersten Prüfelement wechselwirkenden Magnetfelds mit zeitlich veränderlicher magnetischer Feldstärke bzw. zeitlich veränderlicher magnetischer Flußdichte ein zeitlich veränderliches elektrisches Prüfsignal, insb. mit einer von einer vom Magnetfeld abhängigen Wechselspannung und/oder einem vom Magnetfeld abhängigen Wechselstrom, zu erzeugen.

Nach einer ersten Weiterbildung des Prüf-Moduls der Erfindung umfaßt dieses weiters: wenigstens einen mit dem Trägerelement mechanisch verbundenen, beispielsweise vom ersten Prüfelement beabstandeten, Umweltsensor, beispielsweise ein Schallempfänger (Mikrofon), ein Temperatursensor, ein (Mikro-)Bolometer, eine Thermosäule, ein Feuchtesensor, ein Strahlungsdetektor bzw. eine Antenne, zum Erfassen wenigstens einer physikalischen Umwelt-Meßgröße innerhalb des Basis-Moduls, beispielsweise von sich innerhalb des Basis-Moduls ausbreitender multi- und/oder hoch-frequenter elektromagnetischer (Stör-)Strahlung (EMV), von sich innerhalb des Basis-Moduls ausbreitenden Schallwellen, einer sich innerhalb des Basis-Moduls ausbreitenden thermischen Strahlung, einer Temperatur innerhalb des Basis-Moduls oder einer Feuchte innerhalb des Basis-Moduls, und zum Wandeln nämlicher (erfaßter) Umwelt-Meßgröße in ein Umwelt-Meßsignal.

Nach einer zweiten Weiterbildung des Prüf-Moduls der Erfindung umfaßt dieses weiters: wenigstens ein mit dem Trägerelement mechanisch verbundenes, beispielsweise nämlich das Prüf-Modul betreffende bzw. identifizierende Informationen tragendes, Identifizierelement, beispielsweise ein Barcode-Etikett, ein QR-Code-Etikett oder ein Funk-Etikett (RFID-TAG).

Nach einer dritten Weiterbildung des Prüf-Modus der Erfindung umfaßt dieses weiters: wenigstens ein mit dem Trägerelement mechanisch verbundenes Licht emittierendes Halbleiterelement, insb. eine Leuchtdiode (LED).

Nach einer vierten Weiterbildung des Prüf-Moduls der Erfindung umfaßt dieses weiters: einen oder mehrere mit dem Trägerelement mechanisch verbundene Fotosensoren, insb. einen oder mehrere CCD-Fotosensoren und/oder einen oder mehrere CMOS-Fotosensoren.

Nach einer fünften Weiterbildung des Prüf-Moduls der Erfindung umfaßt dieses weiters: wenigstens ein mit dem Trägerelement mechanisch verbundenes, beispielsweise auch zum ersten Prüfelement baugleiches und/oder zum ersten Prüfelement funktionsgleiches und/oder vom ersten Prüfelement beabstandetes, zweites Prüfelement zum Erzeugen und/oder Detektieren eines Magnetfelds. Das Prüf-Modul ist ferner eingerichtet, derart in das erste Basis-Modul eingesetzt und damit wieder lösbar mechanisch verbunden zu werden, daß das zweite Prüfelement innerhalb der Kammer plaziert ist, beispielsweise auch derart, daß das zweite Prüfelement an einer bezüglich einer Ausrichtung und/oder eines kleinsten Abstandes zur zweiten elektrische Spule vorgegebenen und/oder von der ersten Prüfposition beabstandeten zweiten Prüfposition gehalten ist, und/oder daß eine gedachte Längsachse des zweiten Prüfelements und eine gedachte Längsachse der zweiten elektrischen Spule miteinander fluchten bzw. in Verlängerung zueinander parallel verlaufen. Darüberhinaus kann das Prüf-Modul ferner wenigstens ein mit dem Trägerelement mechanisch verbundenes, beispielsweise auch zum ersten und/oder zweiten Prüfelement baugleiches und/oder zum ersten und/oder zweiten Prüfelement funktionsgleiches und/oder von den ersten und zweiten Prüfelementen beabstandetes, drittes Prüfelement zum Erzeugen und/oder Detektieren eines Magnetfelds umfassen.

Nach einer ersten Ausgestaltung des Prüf-Systems der Erfindung ist ferner vorgesehen, daß die Prüfsystem-Elektronik, insb. starr und/oder wieder lösbar, am Prüf-Modul, insb. nämlich an dessen Trägerelement, befestigt ist.

Nach einer zweiten Ausgestaltung des Prüf-Systems der Erfindung ist ferner vorgesehen, daß die Prüfsystem-Elektronik zumindest anteilig innerhalb des Trägerelements des Prüf-Moduls angeordnet ist.

Nach einer dritten Ausgestaltung des Prüf-Systems der Erfindung ist ferner vorgesehen, daß die Prüfsystem-Elektronik wieder trennbar und/oder via Anschlußkabel an das Prüf-Modul elektrisch angeschlossen.

Nach einer vierten Ausgestaltung des Prüf-Systems der Erfindung ist ferner vorgesehen, daß die Prüfsystem-Elektronik wenigstens einen nicht flüchtigen Speicher zum Speichern von digitalen Meß- und/oder Betriebsdaten, insb. nämlich von digitalen Referenzwerten für eine Spannung und/oder einen Strom eines mittels der Meßsystem-Elektronik in die erste elektrische Spule eingespeisten elektrischen Treibersignals und/oder für eine Induktivität der ersten elektrischen Spule und/oder eines oder mehrerer elektronischer Zertifikate des Prüfsystems und/oder des Meßsystems, aufweist.

Nach einer achten Ausgestaltung des Prüf-Modus der Erfindung ist ferner vorgesehen, daß das erste Prüfelement eingerichtet ist, mittels eines eingespeisten zeitlich veränderlichen elektrischen Treibersignals, insb. mit einer eingeprägten Wechselspannung oder einem eingeprägten Wechselstrom, ein (Prüf-)Magnetfeld mit zeitlich veränderlicher magnetischer Feldstärke bzw. zeitlich veränderlicher magnetischer Flußdichte zu erzeugen.

Nach einer fünften Ausgestaltung des Prüf-Systems der Erfindung ist ferner vorgesehen, daß dessen Prüf-Modul wenigstens ein mit dem Trägerelement mechanisch verbundenes, beispielsweise auch zum ersten Prüfelement baugleiches und/oder zum ersten Prüfelement funktionsgleiches und/oder vom ersten Prüfelement beabstandetes, zweites Prüfelement zum Erzeugen und/oder Detektieren eines Magnetfelds, umfaßt, und daß die Prüfsystem-Elektronik eingerichtet ist, das, insb. ein mit dem zweiten Prüfelement wechselwirkendes Magnetfeld repräsentierende, elektrische Prüfsignal vom zweiten Prüfelement abzugreifen und auszuwerten.

Nach einer sechsten Ausgestaltung des Prüf-Systems der Erfindung ist das erste Prüfelement (des Prüf-Moduls) eingerichtet, mittels eines mit dem ersten Prüfelement wechselwirkenden Magnetfelds mit zeitlich veränderlicher magnetischer Feldstärke bzw. zeitlich veränderlicher magnetischer Flußdichte ein zeitlich veränderliches elektrisches Prüfsignal, beispielsweise mit einer von einer vom Magnetfeld abhängigen Wechselspannung und/oder einem vom Magnetfeld abhängigen Wechselstrom, zu erzeugen, und ist zudem die Prüfsystem-Elektronik eingerichtet, das elektrische Prüfsignal vom ersten Prüfelement abzugreifen und auszuwerten, beispielsweise nämlich eine (Wechsel-)Spannung und/oder einen (Wechsel-)Strom eines mittels der Meßsystem-Elektronik in die erste elektrische Spule eingespeisten elektrischen Treibersignals zu ermitteln und/oder eine Induktivität der ersten elektrischen Spule (des Basis-Moduls) zu ermitteln.

Nach einer siebenten Ausgestaltung des Prüf-Systems der Erfindung ist ferner vorgesehen, daß die Prüfsystem-Elektronik eine Funkeinheit, insb. zum Senden von (Prüfsystem-)Daten und/oder zum Empfangen von (Meßsystem-)Daten, aufweist.

Nach einer achten Ausgestaltung des Prüf-Systems der Erfindung ist ferner vorgesehen, daß das Prüf-Modul eingerichtet ist, in das Basis-Modul eingesetzt zu werden, insb. nämlich in das Basis-Modul eingesetzt ist.

Nach einer neunten Ausgestaltung des Prüf-Systems der Erfindung ist ferner vorgesehen, daß die Prüfsystem-Elektronik eingerichtet ist, an die Meßsystem-Elektronik elektrisch angeschlossen zu werden, insb. nämlich an die Meßsystem-Elektronik elektrisch angeschlossen ist.

Nach einer zehnten Ausgestaltung des Prüf-Systems der Erfindung ist ferner vorgesehen, daß die Prüfsystem-Elektronik wenigstens einen Datenausgang zum Ausgeben von, insb. digitalen und/oder mit einem Zeitstempel verknüpfte, (Prüfsystem-)Daten, insb. nämlich von Prüfsystem-Elektronik intern ermittelten Meß- und/oder Betriebsdaten und/oder von Prüfsystem-Elektronik intern generierten Einstellparameter und/oder Steuerkommandos für die Meßsystem-Elektronik, aufweist.

Nach einer elften Ausgestaltung des Prüf-Systems der Erfindung ist ferner vorgesehen, daß die Prüfsystem-Elektronik wenigstens einen Dateneingang zum Empfangen von, insb. digitalen und/oder mit einem Zeitstempel verknüpfte, (Meßsystem-)Daten, insb. nämlich von Meßsystem-Elektronik intern ermittelten Meß- und/oder Betriebsdaten und/oder von Meßsystem-Elektronik intern generierten Einstellparameter und/oder Steuerkommandos für die Prüfsystem-Elektronik, aufweist.

Nach einer zwölften Ausgestaltung des Prüf-Systems der Erfindung ist ferner vorgesehen, daß die Prüfsystem-Elektronik eingerichtet ist mittels eines (ersten) elektrischen (Prüfsystem-)Treibersignals, beispielsweise mit einem eingeprägten Wechselstrom oder mit einer eingeprägten Wechselspannung und/oder mit einer vorgegebenen und/oder vorgebbar veränderlichen und/oder einer mechanischen Resonanzfrequenz des Basis-Moduls entsprechenden Signalfrequenz und/oder mit einem vorgegebenen und/oder vorgebbar veränderlichen Phasenwinkel, elektrische Leistung in das erste Prüfelement einzuspeisen, beispielsweise zum Erzeugen eines (Prüf-)Magnetfelds und/oder derart, daß das (erste) elektrische (Prüfsystem-)Treibersignal einen eine Störung eines mittels des Meßsystems zu erfassenden Meßstoffs nachbildenden Amplituden- und/oder Frequenzverlauf aufweist. Diese Ausgestaltung der Erfindung weiterbilden ist ferner vorgesehen, daß das Prüf-Modul wenigstens ein mit dem Trägerelement mechanisch verbundenes, beispielsweise auch zum ersten Prüfelement baugleiches und/oder zum ersten Prüfelement funktionsgleiches und/oder vom ersten Prüfelement beabstandetes, zweites Prüfelement zum Erzeugen und/oder Detektieren eines Magnetfelds, umfaßt, und daß die Prüfsystem-Elektronik eingerichtet ist, mittels eines (zweiten) elektrischen (Prüfsystem-)Treibersignals, insb. mit einem eingeprägten Wechselstrom oder mit einer eingeprägten Wechselspannung und/oder mit einer vorgegebenen und/oder vorgebbar veränderlichen und/oder einer mechanischen Resonanzfrequenz des Basis-Moduls entsprechenden Signalfrequenz und/oder mit einem vorgegebenen und/oder vorgebbar veränderlichen Phasenwinkel, elektrische Leistung in das zweite Prüfelement einzuspeisen, insb. zum Erzeugen eines (Prüf-)Magnetfelds. Die Prüfsystem-Elektronik kann ferner auch eingerichtet sein, die ersten und zweiten (Prüfsystem-)Treibersignale simultan bereitzustellen, beispielsweise auch derart, daß die ersten und zweiten (Prüfsystem-)Treibersignale die gleiche Signalfrequenz aufweisen und/oder daß zwischen den ersten und zweiten Prüfsystem-Treibsignalen zumindest zeitweise eine vorgegebene und/oder vorgebbar veränderliche Prüf-Phasendifferenz, nämlich eine Differenz zwischen einem Phasenwinkel der ersten und einem Phasenwinkel und zweiten (Prüfsystem-)Treibersignale der Prüfsystem-Elektronik eingestellt ist. In Ergänzung dazu kann die Meßsystem-Elektronik zudem ferner eingerichtet sein, (Parameter-)Meßwerte für die Prüf-Phasendifferenz zu ermitteln und auszuwerten, beispielsweise auch einen oder mehrere (Parameter-)Meßwerte für die Prüf-Phasendifferenz mit einem vorab ermittelten (Parameter-)Referenzwert und/oder einem oder mehreren dafür vorgegebenen Schwellenwerten zu vergleichen. Alternativ oder in Ergänzung kann die Prüfsystem-Elektronik zudem auch eingerichtet sein, das (erste) elektrische (Prüfsystem-)Treibersignal im Verbund mit der Meßsystem-Elektronik und/oder mit einer einer mechanischen Resonanzfrequenz des Basis-Moduls entsprechenden Signalfrequenz bereitzustellen und/oder kann die Meßsystem-Elektronik eingerichtet sein, anhand des mittels (erste) elektrische (Prüfsystem-)Treibersignals generierten ersten Prüfsignals (Simulations-)Meßwerte für wenigstens eine eine Meßgröße, beispielsweise einen Massestrom und/oder eine Dichte und/oder eine Viskosität, und/oder eine Störung eines strömenden Fluids nachbildende Simulationsgröße zu berechnen. Ferner kann Meßsystem-Elektronik zudem auch eingerichtet sein, einen oder mehrere der vorbezeichneten (Simulations-)Meßwerte mit dem (ersten) elektrischen (Prüfsystem-)Treibersignal entsprechenden (Simulations-)Referenzwerten und/oder einem oder mehreren dafür vorgegebenen Schwellenwerten zu vergleichen.

Nach einer dreizehnten Ausgestaltung des Prüf-Systems der Erfindung ist ferner vorgesehen, daß das Basis-Modul eingerichtet ist, (anstelle des Prüf-Moduls) ein Vibronik-Modul des Meßsystems aufzunehmen und damit mechanisch fest, gleichwohl wieder lösbar verbunden zu werden.

Nach einer vierzehnten Ausgestaltung des Prüf-Systems der Erfindung ist das Basis-Modul eingerichtet, (anstelle des Prüf-Moduls) ein Vibronik-Modul des Meßsystems aufzunehmen und damit mechanisch fest, gleichwohl wieder lösbar verbunden zu werden, und ist zudem die Prüfsystem-Elektronik eingerichtet mittels eines (ersten) elektrischen (Prüfsystem-)Treibersignals, beispielsweise mit einem eingeprägten Wechselstrom oder mit einer eingeprägten Wechselspannung und/oder mit einer vorgegebenen und/oder vorgebbar veränderlichen und/oder einer (nominellen) mechanischen Resonanzfrequenz des Vibronik-Moduls entsprechenden Signalfrequenz, elektrische Leistung in das erste Prüfelement einzuspeisen. Diese Ausgestaltung der Erfindung weiterbildend ist ferner vorgesehen, daß die Prüfsystem-Elektronik eingerichtet ist, beispielsweise im Verbund mit der Meßsystem-Elektronik, das (erste) elektrische (Prüfsystem-)Treibersignal mit einem eine Störung des Vibronik-Moduls nachbildenden Amplituden- und/oder Frequenzverlauf bereitzustellen, und/oder daß die Meßsystem-Elektronik eingerichtet ist, anhand des mittels (erste) elektrische (Prüfsystem-)Treibersignals generierten ersten Prüfsignals (Simulations-)Meßwerte für wenigstens eine eine Störung des Vibronik-Moduls nachbildende Simulationsgröße zu berechnen, beispielsweise nämlich mit dem (ersten) elektrischen (Prüfsystem-)Treibersignal entsprechenden (Simulations-)Referenzwerten und/oder einem oder mehreren dafür vorgegebenen Schwellenwerten zu vergleichen.

Nach einer fünfzehnten Ausgestaltung des Prüf-Systems der Erfindung ist ferner vorgesehen, daß die erste elektrische Spule elektrisch an die Meßsystem-Elektronik angeschlossen ist. Diese Ausgestaltung der Erfindung weiterbildend ist die Meßsystem-Elektronik ferner eingerichtet, eine, beispielsweise mittels des ersten Prüfelements induktiv in die erste elektrische Spule eingekoppelte bzw. in der ersten elektrischen Spule induzierte, erste elektrische (Wechsel-)Spannung von der ersten elektrischen Spule zu erfassen und auszuwerten, beispielsweise auch unter Verwendung der ersten (Wechsel-)Spannung (Parameter-)Meßwerte für eine Amplitude, eine Frequenz, einen Phasenwinkel und/oder einen anderen Parameter der ersten (Wechsel-)Spannung zu ermitteln bzw. um solche (Parameter-)Meßwerte zu ermitteln und mit einem vorab ermittelten (Parameter-)Referenzwert und/oder einem oder mehreren dafür vorgegebenen Schwellenwerten zu vergleichen. Alternativ oder in Ergänzung kann die Meßsystem-Elektronik ferner auch eingerichtet sein, Meßwerte für wenigstens eine Meßgröße eines strömenden fluiden Meßstoffs und/oder eine Induktivität der ersten elektrischen Spule zu ermitteln, beispielsweise auch, um die ermittelte Induktivität der ersten elektrischen Spule mit einem vorab ermittelten (Induktivitäts-)Referenzwert und/oder einem oder mehreren dafür vorgegebenen Schwellenwerten zu vergleichen.

Nach einer sechzehnten Ausgestaltung des Prüf-Systems der Erfindung ist ferner vorgesehen, daß die Meßsystem-Elektronik eingerichtet ist, mittels eines (ersten) elektrischen (Meßsystem-)Treibersignals, insb. mit einem eingeprägten Wechselstrom, elektrische Leistung in die erste elektrische Spule einzuspeisen.

Nach einer siebzehnten Ausgestaltung des Prüf-Systems der Erfindung ist ferner vorgesehen, daß das Basis-Modul wenigstens eine innerhalb der Kammer des (Schutz-)Gehäuses plazierte, beispielsweise zylindrische und/oder als Luftspule ausgebildete und/oder zur ersten elektrische Spule baugleiche, zweite elektrische Spule, die, insb. entfernt von der ersten elektrischen Spule positioniert, mit der Gehäusewand zumindest mittelbar mechanisch verbunden ist, aufweist, und daß die zweite elektrische Spule elektrisch an die Meßsystem-Elektronik angeschlossen ist. Diese Ausgestaltung der Erfindung ist die Meßsystem-Elektronik ferner eingerichtet, mittels eines ersten elektrischen (Meßsystem-)Treibersignals, beispielsweise mit einem eingeprägten Wechselstrom, elektrische Leistung in die erste elektrische Spule einzuspeisen und mittels eines zweiten elektrischen (Meßsystem-)Treibersignals, beispielsweise mit einem eingeprägten Wechselstrom, elektrische Leistung in die zweite elektrische Spule einzuspeisen. Alternativ oder in Ergänzung kann die Meßsystem-Elektronik ferner auch eingerichtet sein, eine, beispielsweise induktiv vom ersten Prüfelement in die erste elektrische Spule eingekoppelte bzw. in der zweiten elektrischen Spule induzierte, zweite elektrische (Wechsel-)Spannung von der ersten elektrischen Spule zu erfassen und auszuwerten, beispielsweise nämlich anhand der ersten (Wechsel-)Spannung (Parameter-)Meßwerte für eine Amplitude und/oder eine Frequenz und/oder einen Phasenwinkel und/oder einen anderen Parameter der zweiten (Wechsel-)Spannung und/oder eine Induktivität der ersten elektrischen Spule und/oder Meßwerte für wenigstens eine Meßgröße eines strömenden Fluids zu ermitteln, und/oder kann die Meßsystem-Elektronik auch eingerichtet sein, eine, beispielsweise induktiv von einem zweiten Prüfelement des Prüf-Moduls in die zweite elektrische Spule eingekoppelte bzw. in der zweiten elektrischen Spule induzierte, zweite elektrische (Wechsel-)Spannung von der zweiten elektrischen Spule zu erfassen und auszuwerten, beispielsweise nämlich anhand der zweiten (Wechsel-)Spannung (Parameter-)Meßwerte für eine Amplitude und/oder eine Frequenz und/oder einen Phasenwinkel und/oder einen anderen Parameter der zweiten (Wechsel-)Spannung und/oder eine Induktivität der zweiten elektrischen Spule und/oder Meßwerte für wenigstens eine Meßgröße eines strömenden Fluids zu ermitteln und/oder kann die Meßsystem-Elektronik ferner auch eingerichtet sein, eine zwischen den ersten und zweiten (Wechsel-)Spannungen etablierte Phasendifferenz zu ermitteln, beispielsweise um anhand dessen Meßwerte für einen Massestrom und/oder eine andere Meßgröße eines strömenden Fluids zu ermitteln. Darüberhinaus kann die Meßsystem-Elektronik ferner eingerichtet sein, einen oder mehrere der (Parameter-)Meßwerte mit einem dafür jeweils vorab ermittelten (Parameter-)Referenzwert und/oder einem oder mehreren dafür jeweils vorgegebenen Schwellenwerten zu vergleichen.

Nach einer achtzehnten Ausgestaltung des Prüf-Systems der Erfindung ist ferner vorgesehen, daß die Prüfsystem-Elektronik eingerichtet ist, eine, insb. mittels der ersten elektrischen Spule induktiv in das erste Prüfelement eingekoppelten bzw. im ersten Prüfelement induzierten, elektrische (Wechsel-)Spannung vom ersten Prüfelement zu erfassen und auszuwerten, beispielsweise nämlich unter Verwendung der (Wechsel-)Spannung (Parameter-)Meßwerte für eine Amplitude und/oder eine Frequenz und/oder einen Phasenwinkel und/oder einen anderen Parameter der ersten (Wechsel-)Spannung und/oder für eine Induktivität der ersten elektrischen Spule zu ermitteln. Diese Ausgestaltung der Erfindung weiterbildend ist die Prüfsystem-Elektronik ferner eingerichtet, anhand einer am ersten Prüfelement anliegenden, beispielsweise mittels der ersten elektrischen Spule (des Basis-Moduls) induktiv in das erste Prüfelement eingekoppelten bzw. im ersten Prüfelement induzierten, elektrischen (Wechsel-)Spannung wenigstens einen (Parameter-)Meßwert für eine Spannungshöhe und/oder eine Stromstärke und/oder eine Frequenz und/oder einen anderen (Signal-)Parameter eines mittels der Meßsystem-Elektronik in die erste elektrische Spule eingespeisten elektrischen (Meßsystem-)Treibersignals zu ermitteln und/oder eine Induktivität der ersten elektrischen Spule zu ermitteln. Darüberhinaus kann die Meßsystem-Elektronik ferner eingerichtet sein, einen oder mehrere der (Parameter-)Meßwerte für den wenigstens einen (Signal-)Parameter des (Meßsystem-)Treibersignals und/oder die ermittelte Induktivität der ersten elektrischen Spule mit einem dafür jeweils vorab ermittelten (Parameter-)Referenzwert und/oder einem oder mehreren dafür jeweils vorgegebenen Schwellenwerten zu vergleichen.

Nach einer neunzehnten Ausgestaltung des Prüf-Systems der Erfindung ist ferner vorgesehen, daß die Meßsystem-Elektronik und die Prüfsystem-Elektronik eingerichtet sind, über eine Datenleitung und/oder per Funk miteinander zu kommunizieren, beispielsweise nämlich um im Verbund ein für die Prüfanordnung (vor-)konfektioniertes Prüfprogramm automatisiert und/oder im Dialog mit einem Nutzer der Prüfanordnung auszuführen.

Nach einer zwanzigsten Ausgestaltung des Prüf-Systems der Erfindung ist ferner vorgesehen, daß die Meßsystem-Elektronik eine Funkeinheit, insb. zum Senden von (Meßsystem-)Daten und/oder zum Empfangen von (Prüfsystem-)Daten, aufweist und daß die Prüfsystem-Elektronik eine Funkeinheit, beispielsweise zum Senden von (Prüfsystem-)Daten und/oder zum Empfangen von (Meßsystem-)Daten, aufweist.

Nach einer einundzwanzigsten Ausgestaltung des Prüf-Systems der Erfindung ist ferner vorgesehen, daß die Meßsystem-Elektronik wenigstens einen Datenausgang zum Ausgeben von, beispielsweise digitalen und/oder mit einem Zeitstempel verknüpfte, (Meßsystem-)Daten, beispielsweise nämlich von Meßsystem-Elektronik intern ermittelten Meß- und/oder Betriebsdaten und/oder von Meßsystem-Elektronik intern generierten Einstellparameter und/oder Steuerkommandos für die Prüfsystem-Elektronik, aufweist. Diese Ausgestaltung der Erfindung weiterbilden ist ferner vorgesehen, daß die Prüfsystem-Elektronik einen Dateneingang zum Empfangen von, beispielsweise digitalen, (Meßsystem-)Daten, beispielsweise nämlich von Meßsystem-Elektronik intern ermittelten Meß- und/oder Betriebsdaten und/oder von Meßsystem-Elektronik intern generierten Einstellparameter und/oder Steuerkommandos für die Prüfsystem-Elektronik, aufweist, und daß der Dateneingang der Prüfsystem-Elektronik an den Datenausgang der Meßsystem-Elektronik angeschlossen ist. Zudem kann die Meßsystem-Elektronik ferner eingerichtet sein, (Meßsystem-)Daten, beispielsweise nämlich von Meßsystem-Elektronik intern ermittelten Meß- und/oder Betriebsdaten und/oder von Meßsystem-Elektronik intern generierten Einstellparameter und/oder Steuerkommandos für die Prüfsystem-Elektronik, via Datenausgang an die Prüfsystem-Elektronik zu übermitteln und kann die Prüfsystem-Elektronik zudem eingerichtet sein, nämliche (Meßsystem-)Daten zu empfangen und auszuwerten.

Nach einer zweiundzwanzigsten Ausgestaltung des Prüf-Systems der Erfindung ist ferner vorgesehen, daß die Meßsystem-Elektronik wenigstens einen Dateneingang zum Empfangen von, beispielsweise digitalen, (Prüfsystem-)Daten, beispielsweise nämlich von Prüfsystem-Elektronik intern ermittelten Meß- und/oder Betriebsdaten und/oder von Prüfsystem-Elektronik intern generierten Einstellparameter und/oder Steuerkommandos für die Meßsystem-Elektronik, aufweist. Diese Ausgestaltung der Erfindung weiterbilden ist ferner vorgesehen, daß die Prüfsystem-Elektronik einen Datenausgang zum Ausgeben von, beispielsweise digitalen und/oder mit einem Zeitstempel verknüpfte, (Prüfsystem-)Daten, beispielsweise nämlich von Prüfsystem-Elektronik intern ermittelten Meß- und/oder Betriebsdaten und/oder von Prüfsystem-Elektronik intern generierten Einstellparameter und/oder Steuerkommandos für die Meßsystem-Elektronik, aufweist, und daß der Datenausgang der Prüfsystem-Elektronik an den Dateneingang der Meßsystem-Elektronik angeschlossen ist. Zudem kann die Prüfsystem-Elektronik ferner auch eingerichtet sein, (Prüfsystem-)Daten, beispielsweise nämlich von Prüfsystem-Elektronik intern ermittelten Meß- und/oder Betriebsdaten und/oder von Prüfsystem-Elektronik intern generierten Einstellparameter und/oder Steuerkommandos für die Meßsystem-Elektronik, via Datenausgang an die Meßsystem-Elektronik zu übermitteln, und kann die Meßsystem-Elektronik eingerichtet ferner sein, nämliche (Prüfsystem-)Daten zu empfangen und auszuwerten.

Nach einer dreiundzwanzigsten Ausgestaltung des Prüf-Systems der Erfindung weist das Prüf-Modul wenigstens ein mit dem Trägerelement mechanisch verbundenes, beispielsweise nämlich das Prüf-Modul betreffende bzw. identifizierende Informationen tragendes, Identifizierelement, wie z.B. ein Barcode-Etikett, ein QR-Code-Etikett oder ein Funk-Etikett (RFID-TAG), auf und ist die Meßsystem-Elektronik eingerichtet, vom Identifizierelement des Prüf-Moduls getragene Informationen aus dem Identifizierelement auszulesen, beispielsweise nämlich auszuwerten.

Nach einer vierundzwanzigsten Ausgestaltung des Prüf-Systems der Erfindung ist ferner vorgesehen, daß das Prüf-Modul wenigstens einen mit dem Trägerelement mechanisch verbundenen, beispielsweise vom ersten Prüfelement beabstandeten, Umweltsensor, beispielsweise ein Schallempfänger (Mikrofon), ein Temperatursensor, ein (Mikro-)Bolometer, eine Thermosäule, ein Feuchtesensor, ein Strahlungsdetektor bzw. eine Antenne, zum Erfassen wenigstens einer physikalischen Umwelt-Meßgröße innerhalb des Basis-Moduls, insb. von sich innerhalb des Basis-Moduls ausbreitender multi- und/oder hoch-frequenter elektromagnetischer (Stör-)Strahlung (EMV), von sich innerhalb des Basis-Moduls ausbreitenden Schallwellen, einer sich innerhalb des Basis-Moduls ausbreitenden thermischen Strahlung, einer Temperatur innerhalb des Basis-Moduls oder einer Feuchte innerhalb des Basis-Moduls, und zum Wandeln nämlicher (erfaßter) Umwelt-Meßgröße in ein Umwelt-Meßsignal aufweist und daß die Prüfsystem-Elektronik eingerichtet ist, das Umwelt-Meßsignal zu empfangen und auszuwerten, beispielsweise nämlich Meßwerte für die wenigstens eine Umwelt-Meßgröße zu ermitteln.

Nach einer fünfundzwanzigsten Ausgestaltung des Prüf-Systems der Erfindung weist das erste Prüfelement (des Prüf-Moduls) eine, insb. zylindrische und/oder als Luftspule ausgebildete, elektrische Spule auf und ist das Prüf-Modul zudem so in das Basis-Modul eingesetzt, daß das erste Prüfelement unter Bildung eines Übertragers an einer bezüglich einer Ausrichtung und/oder eines kleinsten Abstandes zur ersten elektrische Spule vorgegebenen ersten Prüfposition gehalten ist.

Nach einer sechsundzwanzigsten Ausgestaltung des Prüf-Systems der Erfindung weist das erste Prüfelement (des Prüf-Moduls) einen Permanentmagneten auf und ist das Prüf-Modul zudem so in das Basis-Modul eingesetzt, daß das erste Prüfelement unter Bildung einer Magnetspule an einer bezüglich einer Ausrichtung und/oder eines kleinsten Abstandes zur ersten elektrische Spule vorgegebenen ersten Prüfposition gehalten ist.

Nach einer siebenundzwanzigsten Ausgestaltung des Prüf-Systems der Erfindung ist das Basis-Modul eingerichtet, ein Vibronik-Modul des Meßsystems aufzunehmen und damit mechanisch fest, gleichwohl wieder lösbar verbunden zu werden, beispielsweise unter Bildung eines Meßaufnehmers vom Vibrationstyp bzw. eines vibronischen Meßsystems und/oder derart, daß das Vibronik-Modul im Basis-Modul arretiert ist. Diese Ausgestaltung der Erfindung weiterbildend ist ferner vorgesehen, daß das Vibronik-Modul austauschbar ausgebildet ist, derart, daß es von außerhalb des (Schutz-)Gehäuses des Basis-Moduls und/oder durch eine in der Gehäusewand vorgesehene (Einschub-)Öffnung des (Schutz-)Gehäuses in die Kammer gebracht werden kann und daß es aus dem Basis-Modul, insb. zerstörungsfrei und/oder werkzeuglos, wieder ausgebaut werden kann, beispielsweise nämlich von außerhalb des Gehäuses und/oder durch die (Einschub-)Öffnung des (Schutz-)Gehäuses herausnehmbar ist. Dementsprechend kann das Basis-Modul eingerichtet sein, das Vibronik-Modul aufzunehmen, falls das Prüf-Modul nicht in das Basis-Modul eingesetzt ist, bzw. das Prüf-Modul aufzunehmen, falls das Vibronik-Modul nicht in das Basis-Modul eingesetzt ist und/oder kann das Basis-Modul eingerichtet sein, mit dem Vibronik-Modul und/oder dem Prüf-Modul jeweils werkzeuglos zusammengebaut zu werden.

Nach einer achtundzwanzigsten Ausgestaltung des Prüf-Systems der Erfindung ist das Basis-Modul eingerichtet, ein Vibronik-Modul des Meßsystems aufzunehmen und damit mechanisch fest, gleichwohl wieder lösbar verbunden zu werden, beispielsweise unter Bildung eines Meßaufnehmers vom Vibrationstyp bzw. eines vibronischen Meßsystems und/oder derart, daß das Vibronik-Modul innerhalb des Basis-Moduls arretiert ist bzw. nicht beweglich ist, und ist das Prüf-Modul eingerichtet, beispielsweise auch gleichermaßen wie das Vibronik-Modul, in das Basis-Modul eingebaut, insb. nämlich von außerhalb des Gehäuses und/oder durch eine in der Gehäusewand vorgesehene (Einschub-)Öffnung des (Schutz-)Gehäuses eingesetzt, zu werden. Diese Ausgestaltung der Erfindung weiterbildend ist ferner vorgesehen, daß das Basis-Modul wenigstens eine innerhalb der Kammer des (Schutz-)Gehäuses plazierte, beispielsweise zylindrische und/oder als Luftspule ausgebildete, (erste) elektrische Spule, die mit der Gehäusewand zumindest mittelbar mechanisch verbunden sowie elektrisch an die Meßsystem-Elektronik angeschlossen ist, aufweist, und daß die Meßsystem-Elektronik ferner eingerichtet ist, mittels eines ersten elektrischen (Meßsystem-)Treibersignals, beispielsweise mit einem eingeprägten Wechselstrom, elektrische Leistung in die erste elektrische Spule einzuspeisen, beispielsweise nämlich das (erstes) elektrische (Meßsystem-)Treibersignal mit einer einer mechanischen Resonanzfrequenz des Vibronik-Moduls entsprechenden Signalfrequenz breitzustellen, und/oder ist vorgesehen, daß das Vibronik-Modul wenigstens einen, insb. zylindrischen, ersten Permanentmagneten aufweist. Ferner kann das Vibronik-Modul zudem eingerichtet sein, so in das Basis-Modul eingebaut zu werden, daß der vorbezeichnete (erste) Permanentmagnet (des Vibronik-Moduls) innerhalb der Kammer plaziert, gleichwohl von der Gehäusewand beabstandet ist, beispielsweise nämlich in einer bezüglich einer Ausrichtung und/oder eines kleinsten Abstandes zur vorbezeichneten (ersten) elektrische Spule (des Basis-Moduls) vorgegebenen und/oder mit der ersten Prüfposition korrespondierenden statischen (ersten) Einbauposition gehalten ist und/oder derart, daß eine gedachte Längsachse des (ersten) Permanentmagnets und eine gedachte Längsachse der (ersten) elektrischen Spule miteinander fluchten bzw. in Verlängerung zueinander parallel verlaufen.

Nach einer neunundzwanzigsten Ausgestaltung des Prüf-Systems der Erfindung ist das Basis-Modul eingerichtet, ein Vibronik-Modul des Meßsystems aufzunehmen und damit mechanisch fest, gleichwohl wieder lösbar verbunden zu werden, beispielsweise unter Bildung eines Meßaufnehmers vom Vibrationstyp bzw. eines vibronischen Meßsystems und/oder derart, daß das Vibronik-Modul im Basis-Modul arretiert ist, wobei das Vibronik-Modul (des Meßsystems) wenigstens ein, beispielsweise zumindest abschnittsweise gerades und/oder zumindest abschnittsweise gebogenes, (erstes) Rohr mit einer eine äußere Mantelfläche des Rohrs bildenden Rohrwandung, beispielsweise aus einem Metall oder einem Kunststoff, und mit einem von nämlicher Rohrwandung umhüllten Lumen, aufweist, und wobei das Vibronik-Modul eingerichtet ist, beispielsweise werkzeuglos, so in das (Schutz-)Gehäuse (des Basis-Moduls) eingebaut zu werden, daß das wenigstens eine Rohr zumindest teilweise bzw. vollständig innerhalb der Kammer plaziert, gleichwohl von der Gehäusewand beabstandet ist. Diese Ausgestaltung der Erfindung weiterbildend ist ferner vorgesehen, daß das erste Rohr zumindest abschnittsweise U-förmig oder V-förmig ausgebildet und/oder dafür eingerichtet ist, in seinem Lumen einen, insb. mit einer vorgebbaren und/oder von einem (einlaßseitigen) ersten Segment-Ende zu einem (auslaßseitigen) zweiten Segment-Ende weisenden Strömungsrichtung, strömenden fluiden Meßstoff zu führen und/oder den Meßstoff zu führen und währenddessen vibrieren gelassen zu werden. Alternativ oder in Ergänzung kann das Vibronik-Modul desweiteren wenigstens ein, beispielsweise zum ersten Rohr bau- und/oder funktionsgleiches, zweites Rohr mit einer eine äußere Mantelfläche des zweiten Rohrs bildenden Rohrwandung, beispielsweise aus einem Metall oder einem Kunststoff bzw. aus dem gleichen Material wie die Rohrwandung des ersten Rohrs, und mit einem von nämlicher Rohrwandung umhüllten Lumen, aufweisen, beispielsweise mit einem außen an der Rohrwandung fixierten zweiten Permanentmagneten.

Nach einer dreißigsten Ausgestaltung des Prüf-Systems der Erfindung ist das Basis-Modul eingerichtet, ein Vibronik-Modul des Meßsystems aufzunehmen und damit mechanisch fest, gleichwohl wieder lösbar verbunden zu werden, beispielsweise unter Bildung eines Meßaufnehmers vom Vibrationstyp bzw. eines vibronischen Meßsystems und/oder derart, daß das Vibronik-Modul im Basis-Moduls arretiert ist, wobei das Vibronik-Modul (des Meßsystems) wenigstens ein, beispielsweise zumindest abschnittsweise gerades und/oder zumindest abschnittsweise gebogenes, (erstes) Rohr mit einer eine äußere Mantelfläche des Rohrs bildenden Rohrwandung, beispielsweise aus einem Metall oder einem Kunststoff, und mit einem von nämlicher Rohrwandung umhüllten Lumen, sowie wenigstens einen, beispielsweise zylindrischen, ersten Permanentmagneten, der außen an der Rohrwandung, beispielsweise nämlich an einem sich zwischen einem ersten Segment-Ende und einem davon entfernten zweiten Segment-Ende erstreckenden Mittel-Segment der Rohrwandung, fixiert ist, beispielsweise nämlich stoffschlüssig mit der Rohrwandung verbunden ist, aufweist, und wobei das Vibronik-Modul eingerichtet ist, beispielsweise werkzeuglos, so in das (Schutz-)Gehäuse (des Basis-Moduls) eingebaut zu werden, daß das wenigstens eine Rohr zumindest teilweise bzw. vollständig innerhalb der Kammer plaziert, gleichwohl von der Gehäusewand beabstandet ist. Diese Ausgestaltung der Erfindung weiterbildend ist ferner vorgesehen, daß das Basis-Modul wenigstens eine innerhalb der Kammer des (Schutz-)Gehäuses plazierte, beispielsweise zylindrische und/oder als Luftspule ausgebildete, (erste) elektrische Spule, die mit der Gehäusewand zumindest mittelbar mechanisch verbunden sowie elektrisch an die Meßsystem-Elektronik angeschlossen ist, aufweist, und/oder daß das Vibronik-Modul eingerichtet ist, so in das Basis-Modul eingebaut zu werden, daß der vorbezeichnete (erste) Permanentmagnet (des Vibronik-Moduls) innerhalb der Kammer plaziert, gleichwohl von der Gehäusewand beabstandet ist, beispielsweise nämlich in einer bezüglich einer Ausrichtung und/oder eines kleinsten Abstandes zur vorbezeichneten (ersten) elektrische Spule (des Basis-Moduls) vorgegebenen und/oder mit der ersten Prüfposition korrespondierenden statischen (ersten) Einbauposition gehalten ist und/oder derart, daß eine gedachte Längsachse des (ersten) Permanentmagnets und eine gedachte Längsachse der (ersten) elektrischen Spule miteinander fluchten bzw. in Verlängerung zueinander parallel verlaufen. Beispielsweise kann der (erste) Permanentmagnet (des Vibronik-Moduls) auch eingerichtet sein, in Einbauposition zusammen mit der ersten elektrischen Spule (des Basis-Moduls) eine, insb. als elektrodynamischer Schwingungserreger dienliche, Schwingspule und/oder eine, insb. als elektrodynamischer Schwingungssensor dienliche, Tauchspule zu bilden. Ferner kann das (erste) Rohr eingerichtet sein, von einem fluiden Meßstoff durchströmt und währenddessen, beispielsweise angetrieben durch einen mittels der ersten elektrischen Spule und dem ersten Permanentmagneten gebildeten Schwingungserreger, vibrieren gelassen zu werden, beispielsweise derart, daß zumindest das vorbezeichnete Mittel-Segment der Rohrwandung Schwingungsbewegungen um eine statische Ruhelage ausführt bzw. daß eine in der (ersten) elektrischen Spule induzierte (Wechsel-)Spannung Schwingungsbewegungen des (ersten) Rohrs repräsentiert. Anhand der ersten (Wechsel-)Spannung Meßwerte kann die Meßsystem-Elektronik beispielsweise auch Meßwerte für wenigstens eine Meßgröße des durch das erste Rohr strömenden Meßstoffs ermitteln. Darüberhinaus kann das Vibronik-Modul ferner einen (entfernt vom ersten Permanentmagneten) am ersten Rohr, beispielsweise dessen Mittel-Segment, fixierten, insb. nämlich stoffschlüssig damit verbundenen, zweiten Permanentmagneten aufweisen.

Nach einer einunddreißigsten Ausgestaltung des Prüf-Systems der Erfindung weist das Basis-Modul wenigstens eine innerhalb der Kammer des (Schutz-)Gehäuses plazierte, beispielsweise zylindrische und/oder als Luftspule ausgebildete und/oder zur ersten elektrische Spule baugleiche, zweite elektrische Spule, die, insb. entfernt von der ersten elektrischen Spule positioniert, mit der Gehäusewand zumindest mittelbar mechanisch verbunden ist, auf, die zweite elektrische Spule elektrisch an die Meßsystem-Elektronik angeschlossen ist, und ist das Basis-Modul ferner eingerichtet, ein Vibronik-Modul des Meßsystems aufzunehmen und damit mechanisch fest, gleichwohl wieder lösbar verbunden zu werden, beispielsweise unter Bildung eines Meßaufnehmers vom Vibrationstyp bzw. eines vibronischen Meßsystems und/oder derart, daß das Vibronik-Modul im Basis-Modul arretiert ist, und ist das Prüf-Modul eingerichtet, beispielsweise auch gleichermaßen wie das Vibronik-Modul, in das Basis-Modul eingebaut, insb. nämlich von außerhalb des Gehäuses und/oder durch eine in der Gehäusewand vorgesehene (Einschub-)Öffnung des (Schutz-)Gehäuses eingesetzt, zu werden. Diese Ausgestaltung der Erfindung weiterbildend ist ferner vorgesehen, daß das Vibronik-Modul einen, beispielsweise zylindrischen, ersten Permanentmagneten sowie wenigstens einen, beispielsweise zylindrischen und/oder zum ersten Permanentmagneten baugleichen, zweiten Permanentmagneten, beispielsweise einen zweiten Permanentmagneten und einen dritten Permanentmagneten, aufweist, Ferner kann das Vibronik-Modul zudem eingerichtet sein, so in das Basis-Modul eingebaut zu werden, daß der (erste) Permanentmagnet (des Vibronik-Moduls) innerhalb der Kammer plaziert, gleichwohl von der Gehäusewand beabstandet ist, beispielsweise nämlich in einer bezüglich einer Ausrichtung und/oder eines kleinsten Abstandes zur ersten elektrischen Spule (des Basis-Moduls) vorgegebenen und/oder mit der ersten Prüfposition korrespondierenden statischen ersten Einbauposition gehalten ist, und/oder derart, daß eine gedachte Längsachse des ersten Permanentmagnets und eine gedachte Längsachse der ersten elektrischen Spule miteinander fluchten bzw. in Verlängerung zueinander parallel verlaufen und/oder kann das Vibronik-Modul zudem eingerichtet sein, so in das Basis-Modul eingebaut zu werden, daß der zweite Permanentmagnet (des Vibronik-Moduls) innerhalb der Kammer plaziert, gleichwohl von der Gehäusewand beabstandet ist, beispielsweise nämlich in einer bezüglich einer Ausrichtung und/oder eines kleinsten Abstandes zur zweiten elektrischen Spule (des Basis-Moduls) vorgegebenen und/oder von der ersten Einbauposition entfernten und/oder mit der zweiten Prüfposition korrespondierenden statischen zweiten Einbauposition gehalten ist, und/oder derart, daß eine gedachte Längsachse des zweiten Permanentmagnets und eine gedachte Längsachse der zweiten elektrischen Spule miteinander fluchten bzw. in Verlängerung zueinander parallel verlaufen.

Nach einer Ausgestaltung des Verfahrens der Erfindung umfaßt das Bilden der Prüfanordnung weiters ein Einsetzen des Prüf-Moduls in das Basis-Modul, beispielsweise (unmittelbar) nach einem Entfernen eines Vibronik-Moduls aus dem Basis-Modul, umfaßt.

Nach einer Weiterbildung des Verfahrens der Erfindung, umfaßt dieses ferner ein Einbinden der Prüfanordnung in ein übergeordnetes elektronisches Datenverarbeitungssystem. Das Datenverarbeitungssystem kann beispielsweise auch mittels einer Speicherprogrammierbaren Steuerung (SPS) und/oder mittels eines Prozeßleitsystems (PLS) und/oder mittels eines Edge(-Computing)-Devices und/oder mittels eines Cloud(-Computing)-Systems gebildet sein.

Ein Grundgedanke der Erfindung besteht u.a. darin, bei einem modularen vibronischen Meßsystem den durch dessen jeweiliges Basis-Modul bereitgestellten Einbauplatz für ein im (normalen) Meßbetrieb eingebautes Vibronik-Modul auch dafür zu nutzen, anstelle eines solchen Vibronik-Moduls gelegentlich ein dem Überprüfen des Basis-Moduls und/oder der daran angeschlossenen Meßsystem-Elektronik dienliches, ggf. auch an eine Prüfsystem-Elektronik angeschlossenes Prüf-Modul aufzunehmen, derart, daß das Prüf-Modul gleichermaßen wie das jeweilige Vibronik-Modul mit dem Basis-Modul zwecks Bildung einer Prüfanordnung verbaut ist. Ein Vorteil der Erfindung besteht darin, daß dadurch auf sehr einfache Weise ein Basis-Modul bzw. eine Meßsystem-Elektronik eines modularen vibronischen Meßsystems auch vor Ort überprüft werden kann, insb. auch in situ bzw. ohne daß dafür das bereits installierte Basis-Modul oder die bereits installierte Meßsystem-Elektronik ausgebaut werden müssen. Eine solche Überprüfung kann im Falle von lediglich einmalig bzw. nur für einen vorgegebenen Zeitraum zu gebrauchenden Vibronik-Modulen ("single-use") vorteilhaft auch im Rahmen eines ohnehin plan- bzw. regelmäßig durchzuführenden Austausches des bis anhin im jeweiligen Basis-Modul verbauten Vibronik-Moduls gegen ein neues Vibronik-Modul erfolgen.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen an sich.

Im einzelnen zeigen:
- Fig. 1, 2: ein Ausführungsbeispiel eines Basis-Moduls, einer Meßsystem-Elektronik und eines Vibronk-Moduls eines (noch zusammen zu bauenden) modularen vibronischen Meßsystems;
- Fig. 3a, 3b: in verschiedenen Seitenansichten ein Ausführungsbeispiel des modularen vibronischen Meßsystems gemäß Fig. 1;
- Fig. 4: ein Ausführungsbeispiel eines (dem Bilden eines Prüf-Systems bzw. einer Prüfanordnung dienlichen) Prüf-Moduls bzw. eines damit gebildeten Prüf-Systems für ein modulares vibronisches Meßsystem gemäß Fig. 1; und
- Fig. 5: ein Ausführungsbeispiel einer mittels eines Prüf-Moduls bzw. Prüf-Systems gemäß Fig. 4 gebildeten Prüfanordnung.

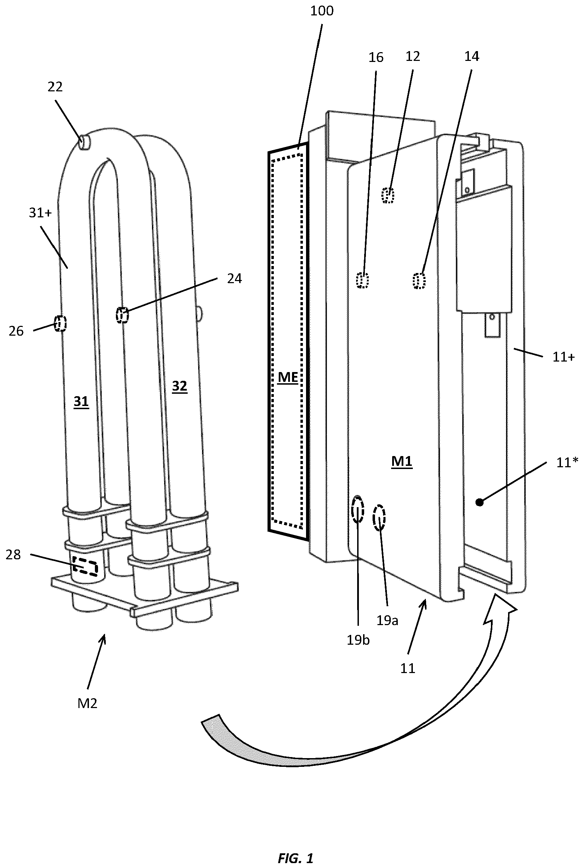

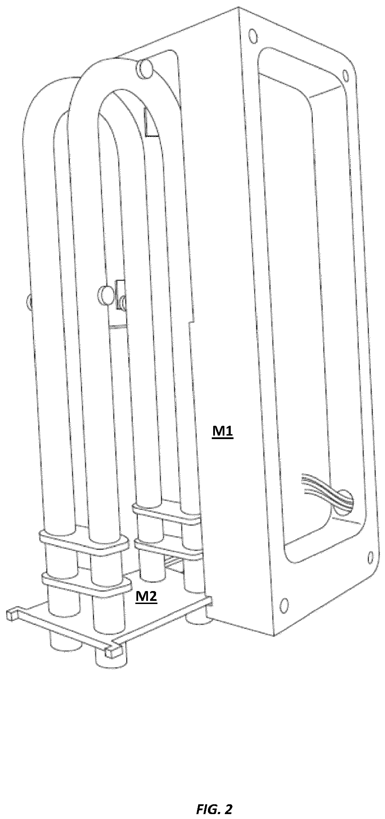

In den Fig. 1, 2, 3a und 3b ist schematisch ein Ausführungsbeispiel eines (modularen) vibronischen Meßsystems gezeigt, das im besonderen dafür vorgesehen ist, wenigstens eine Meßgröße eines in einer (Meßstoff-)Leitung strömenden fluiden Meßstoffs zu erfassen, nämlich Meßwerte für eine oder mehrere Meßgrößen, beispielsweise einen Massestrom, einen Volumenstrom, eine Dichte und/oder eine Viskosität, des Meßstoffs zu ermitteln. Das Meßsystem umfaßt dafür ein Basis-Modul M1, ein Vibronik-Modul M2 sowie eine, beispielsweise programmierbare, Meßsystem-Elektronik ME. Die Meßsystem-Elektronik ME kann beispielsweise mittels eines oder mehreren Mikroprozessoren (µC) gebildet sein und/oder ein, beispielsweise mittels eines Touch-Display gebildetes, Anzeige- und Bedienelement aufweisen, beispielsweise zum Anzeigen von Meß- und/oder Betriebsdaten des Meßsystems. Das Basis-Modul M1 weist ein (Schutz-)Gehäuse 11 mit wenigstens einer von einer Gehäusewand 11+ zumindest teilweise umhüllten Kammer 11 * sowie wenigstens eine innerhalb der Kammer 11* des (Schutz-)Gehäuses plazierte, beispielsweise zylindrische und/oder als Luftspule ausgebildete, erste elektrische Spule 12, die mit der Gehäusewand 11+ zumindest mittelbar mechanisch verbunden sowie elektrisch an die Meßsystem-Elektronik ME angeschlossene ist, auf, und das Vibronik-Modul M2 weist wenigstens einen, beispielsweise zylindrischen, ersten Permanentmagneten 22 auf. Die Meßsystem-Elektronik ME kann, wie bei Meßsystemen der in Rede stehenden Art durchaus üblich, zumindest teilweise ebenfalls innerhalb der Kammer 11* und/oder zumindest teilweise außerhalb der Kammer 11 *, insb. nämlich innerhalb eines Elektronik-Gehäuses 100 des Meßsystems, untergebracht bzw. modular ausgebildet sein. Das Meßsystem kann beispielsweise als ein modulares Coriolis-Massestrom-Meßgerät ausgebildet sein und/oder einem der in den eingangs erwähnten Patentanmeldungen WO-A 2019/017891, WO-A 2021121867, DE-A 10 2019 134 606, DE 102021105397.8, DE 102020133614.4, DE 102020132685.8, DE 102020133851.1, DE 102020133566.0, DE 102020132986.5, DE 102020132686.6, DE 102020132685.8, DE 102020131452.3, DE 102020132223.2, DE 102020127356.8, DE 102020114519.5 bzw. DE 102020112154.7 offenbarten vibronischen Meßsysteme entsprechen.

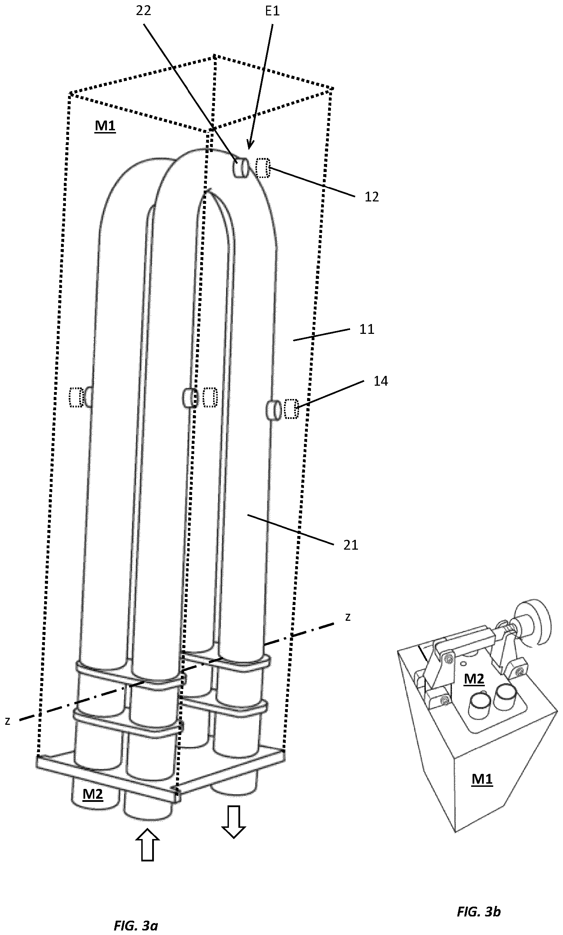

Das Basis-Modul M1 ist, wie in Fig. 3a und 3b schematisch dargestellt bzw. aus einer Zusammenschau der Fig. 1, 2, 3a und 3b ohne weiters ersichtlich, im besonderen eingerichtet, das Vibronik-Modul M2 aufzunehmen und damit mechanisch fest, gleichwohl wieder lösbar verbunden zu werden, beispielsweise nämlich derart, daß das Vibronik-Modul M2 im Basis-Modul M2 arretiert ist, und/oder derart, daß das Vibronik-Modul auch vor Ort, nämlich in ein bereits (in einer Anlage) installiertes Basis-Modul (nachträglich) eingesetzt werden kann. Im besonderen sind das Basis-Modul M1 und das Vibronik-Modul M2 ferner ausgestaltet, unter Bildung eines Meßaufnehmers vom Vibrationstyp (des Meßsystems) zusammengebaut bzw. so zusammengesetzt zu werden, daß mittels der (an die Meßsystem-Elektronik ME angeschlossenen) elektrischen Spule 12 und mittels des Permanentmagneten 22 ein elektro-mechanischer Schwingungserreger und/oder ein (elektro-dynamischer) Schwingungssensor des Meßsystems gebildet ist. Nach einer weiteren Ausgestaltung der Erfindung ist das Vibronik-Modul insbesondere eingerichtet, so in das Basis-Modul eingebaut zu werden, daß dessen Permanentmagnet 22 innerhalb der Kammer 11* plaziert, gleichwohl von der Gehäusewand 11+ beabstandet ist, insb. nämlich in einer bezüglich einer Ausrichtung und/oder eines kleinsten Abstandes zur elektrische Spule 12 vorgegebenen statischen (ersten) Einbauposition E1 gehalten ist und/oder derart, daß eine gedachte Längsachse des ersten Permanentmagnets und eine gedachte Längsachse der elektrischen Spule 12 miteinander fluchten bzw. in Verlängerung zueinander parallel verlaufen. Im besonderen ist der Permanentmagnet 22 ferner eingerichtet, in Einbauposition E1 zusammen mit der elektrischen Spule 12 eine, beispielsweise als elektrodynamischer Schwingungserreger dienliche, Schwingspule und/oder eine, beispielsweise als elektrodynamischer Schwingungssensor dienliche, Tauchspule zu bilden. Nach einer weiteren Ausgestaltung der Erfindung sind das Vibronik-Modul M2 und das Basis-Modul M1 ferner eingerichtet, insb. auch vor Ort, werkzeuglos zusammengebaut und/oder, insb. zerstörungsfrei, wieder auseinandergebaut zu werden, insb. derart, daß das Vibronik-Modul zerstörungsfrei aus dem Basis-Modul M1 wieder ausgebaut werden. Alternativ oder in Ergänzung ist das Vibronik-Modul M2 im besonderen austauschbar ausgebildet bzw. dafür eingerichtet, insb. zerstörungsfrei, auch wieder ausgebaut werden zu können, insb. nämlich auch vor Ort von außerhalb des Gehäuses und/oder durch eine in der Gehäusewand 11+ vorgesehene (Einschub-)Öffnung des (Schutz-)Gehäuses 11 hindurch herausnehmbar ist, und/oder ist das Vibronik-Modul M2 eingerichtet, insb. auch vor Ort, in das Basis-Modul M1 eingebaut zu werden, insb. derart, daß es von außerhalb des (Schutz-)Gehäuses 11 bzw. durch die (Einschub-)Öffnung hindurch in die Kammer 11* eingebracht und hernach entsprechend (wieder lösbar) am Basis-Modul fixiert werden kann. Dies beispielsweise auch ohne dafür das Basis-Modul M1 selbst hantieren bzw. aus der jeweiligen (Prozeß-)Anlage ausbauen zu müssen. Die vorbezeichnete (Einschub-)Öffnung kann zudem, falls erforderlich, nach dem Einbau des Vibronik-Moduls mittels eines entsprechenden Deckels verschlossen werden, beispielsweise auch staubdicht und/oder dicht gegen starkes Strahlwasser und/oder explosionsfest. Im Ergebnis wird es somit u.a. auch ermöglicht, ein defektes oder verschlissenes (altes) Vibronik-Modul vor Ort gegen ein intaktes neues, ggf. auch nur einmalig bzw. nur für einen vorgegebenen Zeitraum zu gebrauchendes ("disposable"), Vibronik-Modul vor Ort sehr einfach auszutauschen. Zwecks Unterstützung eines korrekten Einbauens des Vibronik-Modul M2 in das Basis-Modul M1 können Vibronik-Modul M2 und Basis-Modul M1 jeweils miteinander korrespondierende Führungsstrukturen bzw. -elemente, beispielsweise entsprechende (Führungs-)Nuten in einem der beiden Module (M1, M2) und während des Zusammenbaus darin gleitende (Führungs-)Federn und/oder (Führungs-)Stifte im anderen der beiden Module, aufweisen. Zur weiteren Vereinfachung der Inbetriebnahme des Meßsystems kann das Vibronik-Modul M2 ferner wenigstens ein das Vibronik-Modul M2 betreffende bzw. identifizierende Informationen tragendes Identifizierelement 28, beispielsweise ein Barcode-, QR-Code- bzw. Funk-Etikett (RFID-TAG), aufweisen und/oder kann das Basis-Modul M1 zum Auslesen des Identifizierelements 28 wenigstens ein innerhalb des (Schutz-)Gehäuses positioniertes und an die Meßsystem-Elektronik angeschlossenes (in die Kammer 11* hinein) Licht emittierendes Halbleiterelement 19a, beispielsweise eine Leuchtdiode (LED), und/oder einen oder mehrere, jeweils innerhalb des (Schutz-)Gehäuses positionierte und an die Meßsystem-Elektronik angeschlossene Funk-Sender/Empfänger (RF-Transceiver) und/oder (für die Kammer 11* ausleuchtendes Licht empfindliche) Fotosensoren 19b, beispielsweise nämlich einen oder mehrere CCD-Fotosensoren und/oder einen oder mehrere CMOS-Fotosensoren, aufweisen.

Nach einer weiteren Ausgestaltung der Erfindung weist das Vibronik-Modul M2 wenigstens einen vom Permanentmagneten 22 entfernt positionierten, insb. zylindrischen und/oder zum Permanentmagneten 22 baugleichen, zweiten Permanentmagneten 24 auf. Ferner weist das Basis-Modul M1 dementsprechend wenigstens eine innerhalb der Kammer 11* des (Schutz-)Gehäuses plazierte, beispielsweise zylindrische und/oder als Luftspule ausgebildete und/oder zur ersten elektrische Spule 12 baugleiche, zweite elektrische Spule 14 auf, die (entfernt von der elektrischen Spule 12) mit der Gehäusewand 11+ zumindest mittelbar mechanisch verbunden und ebenfalls elektrisch an die Meßsystem-Elektronik angeschlossen ist, und ist das Basis-Modul zudem eingerichtet, das Vibronik-Modul so aufzunehmen, daß der Permanentmagnet 24 in einer, insb. bezüglich einer Ausrichtung und/oder von der ersten Einbauposition entfernten, zweiten Einbauposition gehalten ist bzw. daß eine gedachte Längsachse des Permanentmagneten 24 und eine gedachte Längsachse der elektrischen Spule 14 miteinander fluchten bzw. in Verlängerung zueinander parallel sind. Darüberhinaus kann das Vibronik-Modul M2 auch mehr als zwei voneinander entfernt angeordnete Permanentmagnete (22, 24), mithin wenigstens einen dritten Permanentmagnet 26, und kann das Basis-Modul M1 mehr als zwei voneinander entfernt innerhalb der Kammer 11* angeordnete elektrische Spulen (12, 14), mithin wenigstens eine dritte Luftspule 16 aufweisen.

Nach einer weiteren Ausgestaltung der Erfindung weist das Vibronik-Modul M2 wenigstens ein (erstes) Rohr 31 mit einer eine äußere Mantelfläche des Rohrs 31 bildenden Rohrwandung, beispielsweise aus einem Metall oder einem Kunststoff, und mit einem von nämlicher Rohrwandung umhüllten Lumen 21*, auf und ist der Permanentmagnet 22 außen an der Rohrwandung fixiert, beispielsweise nämlich stoffschlüssig damit verbunden. Wie in Fig. 1 schematisch dargestellt, kann das wenigstens eine Rohr 31 zumindest abschnittsweise gerade und/oder zumindest abschnittsweise gebogen sein, beispielsweise derart, daß ein sich zwischen einem ersten Segment-Ende und einem davon entfernten zweiten Segment-Ende der Rohrwandung erstreckendes Mittel-Segment der Rohrwandung U-förmig oder V-förmig ausgebildet ist und/oder, daß, wie auch in Fig. 1 schematisch dargestellt, der wenigstens eine Permanentmagnet 22 außen am vorbezeichneten Mittel-Segment angebracht ist. Auch der vorbezeichnete Permanentmagnet 24 und/oder weitere Permanentmagnete (26) des Vibronik-Moduls M2 können beispielsweise ebenfalls außen am Mittel-Segment angebracht sein. Das wenigstens eine Rohr 31 ist ferner u.a. auch dafür vorgesehen, in der vorbeschriebenen Weise in das Basis-Modul M1 eingebaut und zudem auch in den Verlauf einer (Meßstoff-)Leitung, beispielsweise eine Schlauchleitung oder eine Rohrleitung, eingegliedert zu werden. Zudem ist das wenigstens eine Rohr 31 im besonderen eingerichtet, in seinem Lumen einen, insb. zumindest zeitweise mit einer vorgebbaren, beispielsweise nämlich vom vorbezeichneten ersten Segment-Ende zum vorbezeichneten zweiten Segment-Ende weisenden, Strömungsrichtung, strömenden, beispielsweise nämlich über die vorbezeichnete (Meßstoff-)Leitung ein- bzw. ausgeleiten, fluiden Meßstoff zu führen und währenddessen vibrieren gelassen zu werden; dies im besonderen auch in der Weise, daß das wenigstens eine Rohr 31 erzwungene Biege- bzw. Resonanzschwingungen um eine statische Ruhelage ausführt und/oder daß der wenigstens eine Permanentmagnet 22 relativ zur elektrischen Spule 12 bewegt wird. Derartige mechanische Schwingungen des wenigstens einen (Meß-)Rohrs 31 bzw. dessen Mittel-Segments können beispielsweise mittels des vorbezeichneten, mittels des Permanentmagneten 22 und der Spule 12 gebildeten Schwingungserregers angeregt bzw. aufrechterhalten und/oder mittels des vorbezeichneten, (mittels des Permanentmagneten 22 und der Spule 12) gebildeten Schwingungssensors erfaßt werden, insb. derart, daß durch den Schwingungssensor wenigstens ein nämliche Schwingungen des Rohrs 31 bzw. dessen Mittel-Segments repräsentierendes Schwingungssignal bereitgestellt wird. Nicht zuletzt um derartige Vibrationen des wenigstens einen (Meß-)Rohrs 31, insb. nämlich des vorbezeichneten Mittel-Segments, zu ermöglichen ist das Vibronik-Modul M2 nach einer weiteren Ausgestaltung der Erfindung ferner eingerichtet, so in Basis-Modul M1 bzw. dessen (Schutz-)Gehäuse 11 eingebaut zu werden, daß, wie auch in Fig. 3a schematisch dargestellt, das wenigstens (Meß-)Rohr 31 zumindest teilweise, beispielsweise auch vollständig, innerhalb der Kammer 11* plaziert, gleichwohl zumindest dessen vorbezeichnetes Mittel-Segment von der Gehäusewand 11+ beabstandet ist.

Wie bei solchen Vibronik-Modulen bzw. damit gebildeten vibronischen Meßsystemen durchaus üblich, kann das Vibronik-Modul M2 weiters wenigstens ein, beispielsweise auch zum ersten Rohr baugleiches und/oder funktionsgleiches, zweites (Meß-)Rohr 32 mit einer eine äußere Mantelfläche des zweiten Rohrs bildenden Rohrwandung, insb. aus einem Metall oder einem Kunststoff, und mit einem von nämlicher Rohrwandung umhüllten Lumen, aufweisen. Für diesen Fall, kann der vorbezeichnete zweite Permanentmagnet 24, beispielsweise nämlich vis-a-vis des am ersten Rohr 31 fixierten Permanentmagneten 22, auch am zweiten Rohr fixiert, insb. nämlich stoffschlüssig damit verbunden, sein; dies beispielsweise auch derart, daß eine gedachte Längsachse des Permanentmagneten 24 und eine gedachte Längsachse des Permanentmagneten 22 miteinander fluchten bzw. in Verlängerung zueinander parallel verlaufen. Die ersten und zweiten (Meß-)Rohre 31, 32 können zudem, wie bei vibronsichen Meßsystemen der in Rede stehenden Art durchaus üblich, mittels eines einlaßseitigen ersten Strömungsteilers und eines auslaßseitigen zweiten Strömungsteilers miteinander fluidisch verbunden und ggf. auch im Betrieb des Meßsystems in den Verlauf der vorbezeichneten (Meßstoff-)Leitung eingegliedert sein. Nicht zuletzt für den vorbeschriebenen Fall, daß das Vibronik-Modul M2 mittels zweier Rohre (31, 32) gebildet ist, kann das Vibronik-Modul M2 auch mehr als drei voneinander entfernt angeordnete Permanentmagnete, beispielsweise nämlich insgesamt wenigsten sechs Permanentmagnete, und kann das Basis-Modul M1 dementsprechend mehr als drei voneinander entfernt innerhalb der Kammer 11* angeordnete elektrische Spulen, beispielsweise nämlich insgesamt wenigstens sechs, beispielsweise auch jeweils als Luftspulen ausgebildete, elektrische Spulen aufweisen.

Zum Anregen und Aufrechterhalten mechanischer Schwingungen des wenigstens eine (Meß-)Rohrs 31 bzw. des damit gebildeten Vibronik-Moduls M2 ist die Meßsystem-Elektronik ME nach einer weiteren Ausgestaltung zudem eingerichtet, ein erstes elektrische (Meßsystem-)Treibersignal bereitzustellen und in wenigstens eine der elektrischen Spulen (12, 14) des Basis-Moduls M2, beispielsweise nämlich die Spule 12 und/oder die vorbezeichnete Spule 14, einzuleiten, um für die vorbezeichneten mechanischen Schwingungen benötigte elektrische Leistung in die wenigstens eine elektrische Spule einzuspeisen; dies im besonderen in der Weise, daß das wenigstens eine (Meßsystem-)Treibersignal einen eingeprägten Wechselstrom und/oder wenigstens eine einer mechanischen Resonanzfrequenz des Vibronik-Moduls M2, insb. nämlich dessen wenigstens einen (Meß-)Rohrs 31 entsprechenden Signalfrequenz aufweist. Für den vorbezeichneten Fall, daß das Basis-Modul M1 neben der elektrischen Spule 12 auch zumindest die elektrische Spule 14 umfaßt, kann die Meßsystem-Elektronik ME zudem ferner eingerichtet sein, mittels eines zweiten elektrischen (Meßsystem-)Treibersignals, insb. mit einem eingeprägten Wechselstrom und/oder mit einer einer mechanischen Resonanzfrequenz des Vibronik-Moduls bzw. dessen wenigstens einen (Meß-)Rohrs entsprechenden Signalfrequenz und/oder simultan mit dem ersten Treibersignal, elektrische Leistung in die zweite elektrische Spule 14 einzuspeisen.

Nach einer anderen Ausgestaltung der Erfindung ist die Meßsystem-Elektronik ME u.a. auch dafür eingerichtet, eine, beispielsweise in der elektrischen Spule 12 und/oder in die vorbezeichnete Spule 14 induzierte, erste elektrische (Wechsel-)Spannung von der elektrischen Spule 12 (14) zu erfassen und auszuwerten, beispielsweise nämlich unter Verwendung der (Wechsel-)Spannung (Parameter-)Meßwerte für wenigstens einen Parameter der (Wechsel-)Spannung, wie etwa eine Amplitude, eine Frequenz und/oder einen Phasenwinkel, zu ermitteln und/oder basierend auf der (Wechsel-)Spannung bzw. dafür ermittelten (Parameter-)Meßwerten Meßwerte für die wenigstens vom Meßstoff eine zu erfassende Meßgröße zu berechnen. Desweiteren kann die Meßsystem-Elektronik ME auch eingerichtet sein, basierend auf der (Wechsel-)Spannung bzw. dafür ermittelten (Parameter-)Meßwerten Meßwerte für eine Induktivität der elektrischen Spule zu berechnen, beispielsweise um diese bei einer Überprüfung einer Funktionstüchtigkeit des Meßsystems entsprechend zu berücksichtigen bzw. um die ermittelte Induktivität der ersten elektrischen Spule 12 mit einem vorab ermittelten (Induktivitäts-)Referenzwert und/oder einem oder mehreren dafür vorgegebenen Schwellenwerten zu vergleichen. Alternativ oder in Ergänzung kann die Meßsystem-Elektronik ME beispielsweise auch eingerichtet sein, zur Überprüfung der Funktionstüchtigkeit des Meßsystems einen oder mehrere der vorbezeichneten (Parameter-)Meßwerte mit einem oder mehreren dafür vorab ermittelten
(Parameter-)Referenzwerten und/oder einem oder mehreren dafür vorgegebenen Schwellenwerten zu vergleichen. Für den vorbezeichneten Fall, daß das Basis-Modul M1 neben der elektrischen Spule 12 auch zumindest die elektrische Spule 14 umfaßt, kann die Meßsystem-Elektronik zudem aber auch eingerichtet sein, eine, in der Spule 14 induzierte, zweite elektrische (Wechsel-)Spannung von der zweiten elektrischen Spule zu erfassen und auszuwerten, beispielsweise nämlich anhand auch der zweiten (Wechsel-)Spannung (Parameter-)Meßwerte für den wenigstens einen Parameter der zweiten (Wechsel-)Spannung und/oder eine zwischen den ersten und zweiten (Wechsel-)Spannungen etablierte Phasendifferenz zu berechnen, beispielsweise um basierend darauf Meßwerte für die wenigstens eine vom Meßstoff zu erfassende Meßgröße zu berechnen. Nach einer weiteren Ausgestaltung der Erfindung ist die Meßsystem-Elektronik im besonderen auch dafür eingerichtet anhand einer zwischen den ersten und zweiten (Wechsel-)Spannungen etablierten Phasendifferenz Meßwerte für wenigstens eine Meßgröße, insb. einen Massestrom, eines strömenden Fluids zu ermitteln und/oder ist die Meßsystem-Elektronik eingerichtet, (Parameter-)Meßwerte für die vorbezeichnete Phasendifferenz zu ermitteln und auszuwerten, beispielsweise nämlich einen oder mehrere (Parameter-)Meßwerte für die Phasendifferenz mit einem vorab ermittelten (Parameter-)Referenzwert und/oder einem oder mehreren dafür vorgegebenen Schwellenwerten zu vergleichen. Alternativ oder in Ergänzung kann die Meßsystem-Elektronik ferner eingerichtet sein, Meßwerte auch für eine Induktivität der zweiten elektrischen Spule zu ermitteln.

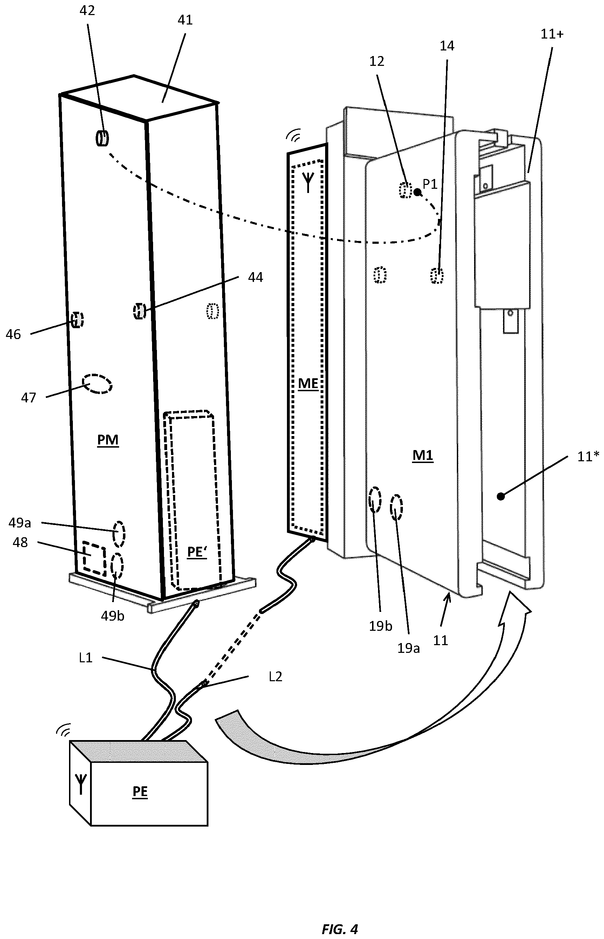

Um die Funktionstüchtigkeit des Basis-Moduls M1 an sich und/oder der daran elektrisch angeschlossenen Meßsystem-Elektronik ME bzw. des so gebildeten Teilsystems sehr einfach, ggf. nämlich auch vor Ort bei einem Inbetriebnehmen und/oder wiederkehrend, überprüfen bzw. verifizieren zu können, wird erfindungsgemäß ein entsprechendes Prüf-Modul PM vorgeschlagen bzw. bereitgestellt, das - wie auch in Fig. 4 schematisch dargestellt - ein, beispielsweise monolithisches und/oder plattenförmiges, Trägerelement 41 sowie wenigstens ein mit dem Trägerelement 41 mechanisch verbundenes, insb. elektrisches und/oder magnetisches und/oder elektronisches und/oder auf einer Leiterplatte des Prüf-Moduls PM angeordnetes, erstes Prüfelement 42 zum Erzeugen und/oder Detektieren eines Magnetfelds, beispielsweise nämlich eine elektrische Spule und/oder ein Permanentmagnet, aufweist. Das Trägerelement 41 kann beispielsweise aus Metall und/oder einem, beispielsweise auch das wenigstens eine Prüfelement 41 bzw. die vorbezeichnete Leiterplatte zumindest teilweise einbettenden, Kunststoff bestehen bzw. hergestellt sein, beispielsweise auch derart, daß mittels des vorbezeichneten Kunststoffs eine äußere Schutzschicht des Trägerelements 41 gebildet ist. Bei dem vorbezeichneten Kunststoff kann es sich beispielsweise um einem chemisch beständigen und/oder hochfesten Kunststoff, wie z.B. ein Polycarbonat (PC) oder ein PolyEtherEtherKeton (PEEK), handeln.

Nach einer weiteren Ausgestaltung der Erfindung ist das erste Prüfelement 42 eingerichtet, mittels eines eingespeisten zeitlich veränderlichen elektrischen Treibersignals, beispielsweise mit einer eingeprägten Wechselspannung oder einem eingeprägten Wechselstrom, ein (Prüf-)Magnetfeld mit zeitlich veränderlicher magnetischer Feldstärke bzw. zeitlich veränderlicher magnetischer Flußdichte zu erzeugen und/oder ist das erste Prüfelement 42 eingerichtet, mittels eines mit dem ersten Prüfelement wechselwirkenden Magnetfelds mit zeitlich veränderlicher magnetischer Feldstärke bzw. zeitlich veränderlicher magnetischer Flußdichte ein zeitlich veränderliches erstes elektrisches Prüfsignal, beispielsweise mit einer von einer vom Magnetfeld abhängigen Wechselspannung und/oder einem vom Magnetfeld abhängigen Wechselstrom, zu erzeugen. Das erste Prüfelement 42 kann dementsprechend beispielsweise eine als zylindrische und/oder als Luftspule ausgebildete elektrische Spule und/oder einen Permanentmagneten aufweisen. Alternativ oder in Ergänzung kann das erste Prüfelement 42 beispielsweise auch mittels eines CMOS-Hall-Sensors oder mittels eines anderen Hall-Sensors gebildet sein.

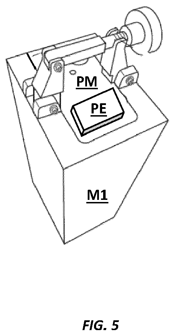

Das erfindungsgemäße Prüf-Modul PM ist, wie auch in Fig. 5 schematisch dargestellt bzw. aus einer Zusammenschau der Fig. 4 und 5 ohne weiteres ersichtlich, ferner im besonderen dafür vorgesehen bzw. ausgestaltet, zum Bilden einer Prüfanordnung (PM+M1; PM+M1+ME) verwendet, nämlich (anstelle des Vibronik-Moduls M2) in das Basis-Modul M1 eingesetzt und damit wieder lösbar mechanisch verbunden zu werden, derart, daß das Trägerelement 41 und das erste Prüfelement 42 innerhalb der Kammer 11+ plaziert sind; dies im besonderen in gleicher Weise wie das Vibronik-Modul M2 bzw. derart, daß das Prüf-Modul PM im Basis-Modul M1 arretiert ist bzw. nicht beweglich ist. Im besonderen ist das Prüf-Modul PM zudem eingerichtet, so in das Basis-Modul M1 eingebaut zu werden, daß das erste Prüfelement 42 in einer durch die erste elektrische Spule 12 des Basis-Moduls vorgegebenen bzw. mit der vorbezeichneten ersten Einbauposition korrespondierenden ersten Prüfposition P1 gehalten ist, beispielsweise nämlich auch derart, daß das in der ersten Prüfposition P1 gehaltene erste Prüfelement 42 zur ersten elektrischen Spule 12 eine vorgegeben Ausrichtung und/oder einen vorgegebenen kleinsten Abstand aufweist und/oder daß eine gedachte Längsachse des ersten Prüfelements und eine gedachte Längsachse der ersten elektrischen Spule 12 miteinander fluchten bzw. in Verlängerung zueinander parallel verlaufen. Für den vorbezeichneten Fall, daß das Prüfelement 42 eine elektrische Spule aufweist, kann das Prüfelement 42 zusammen mit der elektrischen Spule 12 des Basis-Moduls M1 beispielsweise einen Übertrager bilden und für den anderen erwähnten Fall, daß das das Prüfelement 42 einen Permanentmagneten aufweist, kann das Prüfelement 42 zusammen mit der elektrischen Spule 12 des Basis-Moduls M1 beispielsweise auch eine Magnetspule bilden. Zwecks Unterstützung eines korrekten Einbauens des Prüf-Moduls PM in das Basis-Modul M1 kann das Prüf-Modul PM zudem auch den vorbezeichneten Führungsstrukturen bzw. -elementen des Vibronik-Moduls M2 entsprechenden bzw. mit den vorbezeichneten Führungsstrukturen bzw. -elementen des Basis-Moduls M1 korrespondierenden aufweisen.

Nicht zuletzt für den vorbezeichneten Fall, daß das Basis-Modul M1 mehrere elektrischen Spulen, beispielsweise nämlich zumindest auch die Spule 14, aufweist, kann das Prüf-Modul PM ferner in entsprechender Weise wenigstens ein mit dem Trägerelement 41 mechanisch verbundenes, beispielsweise nämlich zum ersten Prüfelement 42 bau- und/oder funktionsgleiches und/oder vom ersten Prüfelement beabstandetes, zweites Prüfelement 44 zum Erzeugen und/oder Detektieren eines Magnetfelds, ggf. auch zusätzlich wenigstens ein mit dem Trägerelement 41 mechanisch verbundenes, insb. zum ersten und/oder zweiten Prüfelement bau- und/oder funktionsgleiches und/oder von den ersten und zweiten Prüfelementen beabstandetes, drittes Prüfelement 46 zum Erzeugen und/oder Detektieren eines Magnetfelds aufweisen. Zudem kann das Prüf-Modul PM ferner eingerichtet sein, derart in das erste Basis-Modul M! eingesetzt und damit wieder lösbar mechanisch verbunden zu werden, daß jedes der vorbezeichneten Prüfelemente jeweils innerhalb der Kammer 11+ plaziert ist, beispielsweise derart, daß das zweite Prüfelement 44 an einer bezüglich einer Ausrichtung und/oder eines kleinsten Abstandes zur zweiten elektrische Spule 14 vorgegebenen und/oder von der ersten Prüfposition P1 beabstandeten und/oder mit der vorbezeichneten zweite Einbauposition korrespondierenden zweiten Prüfposition gehalten ist, und/oder daß eine gedachte Längsachse des zweiten Prüfelements 44 und eine gedachte Längsachse der zweiten elektrischen Spule 14 miteinander fluchten bzw. in Verlängerung zueinander parallel verlaufen.

Nach einer weiteren Ausgestaltung der Erfindung ist das erfindungsgemäße Prüf-Modul PM, beispielsweise nämlich dessen erstes Prüfelement 42 und ggf. an das vorbezeichnete zweite Prüfelement 44 oder beispielsweise auch an weitere Prüfelemente (46) des Prüf-Moduls PM, unter Bildung eines dem Überprüfen des Basis-Moduls M1 und/oder der an das Basis-Modul M1 elektrisch angeschlossenen Meßsystem-Elektronik ME dienlichen Prüfsystems ferner an eine, beispielsweise mittels eines oder mehreren Mikroprozessoren (µC) gebildete und/oder programmierbare, Prüfsystem-Elektronik PE (PE+PE') elektrisch angeschlossen. Die Prüfsystem-Elektronik PE (des Prüfsystems) kann, wie auch in Fig. 4 schematisch dargestellt, beispielsweise modular (PE+PE') aufgebaut bzw. wieder trennbar und/oder via Anschlußkabel L1 an das Prüf-Modul PM, insb. an ein oder mehrere von dessen Prüfelementen (42, 44, 46), angeschlossen und/oder tragbar ausgebildet sein. Alternativ oder in Ergänzung kann die Prüfsystem-Elektronik PE auch direkt, beispielsweise nämlich auch starr am, Prüf-Modul PM bzw. an dessen Trägerelement 41 befestigt und/oder zumindest anteilig innerhalb des Trägerelements 41 angeordnet, ggf. auch zumindest teilweise (PE`) in dessen vorbezeichneten Kunststoff eingebettet sein. Darüberhinaus kann die Prüfsystem-Elektronik PE auch eingerichtet sein, an die Meßsystem-Elektronik ME elektrisch angeschlossen zu werden, beispielsweise via Kabelverbindung L2 und/oder um von der Meßsystem-Elektronik ME für den Betrieb erforderliche elektrische Leistung zu beziehen und/oder um mit der Meßsystem-Elektronik ME für den Betrieb der Prüfanordnung erforderliche Meß- bzw. Steuerungsdaten austauschen zu können bzw. auszutauschen. Alternativ oder in Ergänzung kann die Prüfsystem-Elektronik PE auch einen die für den Betrieb des Prüfsystems benötigte elektrische Energie zumindest anteilig vorhaltenden (wiederaufladbaren) Energiespeicher und/oder eine Funkeinheit, beispielsweise zum Senden von (Prüfsystem-)Daten und/oder zum Empfangen von (Meßsystem-)Daten, aufweisen. Zum Speichern von digitalen Meß- und/oder Betriebsdaten, beispielsweise nämlich auch eines oder mehrerer digitalisierter Zertifikate des Prüf- und/oder Meßsystems und/oder eines oder mehrerer mittels der so gebildeten Prüfanordnung erzielten digitalisierten Prüfergebnisse und/oder eines oder mehrerer digitaler Nenn- bzw. Referenzwerte für mechanische, elektrische und/oder elektromechanische Parameter von in das Basis-Modul M1 jeweils einsetzbaren Vibronik-Modulen, kann die Prüfsystem-Elektronik ferner wenigstens einen nicht flüchtigen Speicher (EEPROM) aufweisen. Zum Anzeigen von (Prüfsystem-)Daten, ggf. auch von (Meßsystem-)Daten und/oder zum Bedienen des Prüf-Systems bzw. der damit gebildeten Prüfanordnung kann die Prüfsystem-Elektronik ME bzw. die damit gebildete Prüfanordnung ferner auch ein, beispielsweise mittels eines Touch-Display gebildetes, Anzeige- und Bedienelement (HMI) aufweisen.

Nach einer weiteren Ausgestaltung der Erfindung ist die Prüfsystem-Elektronik PE ferner u.a. auch dafür eingerichtet, beispielsweise auch im Verbund mit der Meßsystem-Elektronik ME, ein (erstes) elektrisches (Prüfsystem-)Treibersignal, beispielsweise mit einem eingeprägten Wechselstrom oder mit einer eingeprägten Wechselspannung und/oder mit einer vorgegebenen und/oder vorgebbar veränderlichen Signalfrequenz und/oder mit einem vorgegebenen und/oder vorgebbar veränderlichen Phasenwinkel, zu generieren, beispielsweise auch derart, daß die wenigstens eine Signalfrequenz des (Prüfsystem-)Treibersignals einer mechanischen Resonanzfrequenz des Basis-Moduls M1 entspricht, sowie mittels des (ersten) elektrischen (Prüfsystem-)Treibersignals elektrische Leistung in das erste Prüfelement 42 einzuspeisen, beispielsweise zum Erzeugen eines (Prüf-)Magnetfelds. Alternativ oder in Ergänzung kann die Prüfsystem-Elektronik PE ferner eingerichtet sein, beispielsweise im Verbund mit der Meßsystem-Elektronik ME, das (erste) elektrische (Prüfsystem-)Treibersignal mit einer einer (nominellen) mechanischen Resonanzfrequenz des Vibronik-Moduls M2 entsprechenden Signalfrequenz bereitzustellen. Darüberhinaus kann die Prüfsystem-Elektronik PE ferner eingerichtet sein, mittels eines (zweiten) elektrischen (Prüfsystem-)Treibersignals, beispielsweise mit einem eingeprägten Wechselstrom oder mit einer eingeprägten Wechselspannung und/oder mit einer vorgegebenen und/oder vorgebbar veränderlichen und/oder einer mechanischen Resonanzfrequenz des Basis-Moduls M1 entsprechenden Signalfrequenz und/oder mit einem vorgegebenen und/oder vorgebbar veränderlichen Phasenwinkel, elektrische Leistung in das zweite Prüfelement 44 einzuspeisen, beispielsweise nämlich auch simultan mit dem vorbezeichneten ersten (Prüfsystem-)Treibersignal und/oder derart, daß die ersten und zweiten (Prüfsystem-)Treibersignale die gleiche Signalfrequenz aufweisen. Nach einer weiteren Ausgestaltung ist die Prüfsystem-Elektronik PE ferner im besonderen auch dafür eingerichtet, die ersten und zweiten (Prüfsystem-)Treibersignale so zu erzeugen, daß zwischen nämlichen ersten und zweiten Prüfsystem-Treibsignalen zumindest zeitweise eine vorgegebene und/oder vorgebbar veränderliche (Prüf-)Phasendifferenz, nämlich eine Differenz zwischen einem Phasenwinkel des ersten (Prüfsystem-)Treibersignals und einem Phasenwinkel des zweiten (Prüfsystem-)Treibersignals eingestellt ist. Zudem kann die Prüfsystem-Elektronik eingerichtet sein, die (Prüf-)Phasendifferenz in Form von digitalen (Prüfsystem-)Daten an die Meßsystem-Elektronik ME zu übermitteln, und/oder kann die Meßsystem-Elektronik ME eingerichtet sein, (Parameter-)Meßwerte für die vorbezeichnete Prüfsystem-Phasendifferenz zu ermitteln und auszuwerten, beispielsweise nämlich einen oder mehrere (Parameter-)Meßwerte für die (Prüfsystem-)Phasendifferenz mit einem vorab ermittelten (Parameter-)Referenzwert und/oder einem oder mehreren dafür vorgegebenen Schwellenwerten zu vergleichen. Nach einer weiteren Ausgestaltung der Erfindung ist die Prüfsystem-Elektronik PE ferner eingerichtet, beispielsweise auch im Verbund mit der Meßsystem-Elektronik ME, das (erste) elektrische (Prüfsystem-)Treibersignal mit einem eine Störung des Meßsystems nachbildenden Amplituden- und/oder Frequenzverlauf bereitzustellen. Solche (mittels der Prüfsystem-Elektronik PE bzw. mittels des Prüfsystems nachzubildenden) Störungen des Meßsystems können beispielsweise eine, ggf. auch irreversible Störung des Basis-Moduls M1 und/oder eines darin eingesetzten Vibronik-Moduls (M2), beispielsweise infolge von Verschleiß, und/oder eine (vorübergehende) Störung eines mittels des Meßsystems zu erfassenden Meßstoffs, beispielsweise durch darin mitgeführte Fremdstoffe, sein. Alternativ oder in Ergänzung kann zudem die Meßsystem-Elektronik ME auch eingerichtet sein, anhand eines mittels des (ersten) elektrischen (Prüfsystem-)Treibersignals in der ersten elektrischen Spule generierten (Meßsystem-)Prüfsignals (Simulations-)Meßwerte für wenigstens eine eine Störung des Vibronik-Moduls nachbildende Simulationsgröße zu berechnen, beispielsweise nämlich mit dem (ersten) elektrischen (Prüfsystem-)Treibersignal entsprechenden (Simulations-)Referenzwerten und/oder einem oder mehreren dafür vorgegebenen Schwellenwerten zu vergleichen, und/oder kann die Meßsystem-Elektronik ME eingerichtet sein, (Simulations-)Meßwerte für wenigstens eine eine Meßgröße, insb. einen Massestrom und/oder eine Dichte und/oder eine Viskosität, und/oder eine Störung eines strömenden Fluids nachbildende Simulationsgröße zu berechnen, insb. nämlich mit dem (ersten) elektrischen (Prüfsystem-)Treibersignal entsprechenden (Simulations-)Referenzwerten und/oder einem oder mehreren dafür vorgegebenen Schwellenwerten zu vergleichen. Neben auf Verschleiß einzelner Komponenten bzw. Module und/oder Störungen des Meßstoffs bedingte Störungen des Meßsystems können zudem auch verschiedene Umwelt-Meßgrößen, wie z.B. eine sich innerhalb des Basis-Moduls M1 ausbreitende multi- und/oder hoch-frequenter elektromagnetische (Stör-)Strahlung (EMV), sich innerhalb des Basis-Moduls M1 ausbreitende Schallwellen, insb. nämlich Luft- und/oder Körperschallwellen, eine sich innerhalb des Basis-Moduls M1 ausbreitende thermische Strahlung, eine zu hohe bzw. zu niedrige Temperatur innerhalb des Basis-Moduls M1 oder eine zu hohe Feuchte innerhalb des Basis-Moduls M1, die Funktionstüchtigkeit bzw. Meßgenauigkeit des Meßsystem beinträchtigen. Zum Erfassen wenigstens einer physikalischen Umwelt-Meßgröße innerhalb des Basis-Moduls M1 und zum Wandeln nämlicher (erfaßter) Umwelt-Meßgröße in ein Umwelt-Meßsignal weist das Prüf-Modul PM nach einer weiteren Ausgestaltung daher weiter wenigstens einen mit dem Trägerelement 41 mechanisch verbundenen, ggf. auch vom ersten Prüfelement 42 beabstandeten, Umweltsensor 47, beispielsweise ein Schallempfänger (Mikrofon), ein Temperatursensor, ein (Mikro-)Bolometer, eine Thermosäule, ein Feuchtesensor, ein Strahlungsdetektor bzw. eine Antenne, auf und ist die Prüfsystem-Elektronik PE zudem eingerichtet, das Umwelt-Meßsignal zu empfangen und auszuwerten, beispielsweise nämlich Meßwerte für die wenigstens eine Umwelt-Meßgröße zu ermitteln und ggf. mit dafür jeweils vorgegebenen Schwellenwerten zu vergleichen.

Nach einer weiteren Ausgestaltung der Erfindung ist die Prüfsystem-Elektronik PE ferner eingerichtet, eine mittels der ersten elektrischen Spule 12 induktiv in das erste Prüfelement 42 eingekoppelte bzw. im ersten Prüfelement 42 induzierte elektrische (Wechsel-)Spannung vom ersten Prüfelement 42 zu erfassen und in der Weise auszuwerten, daß die Prüfsystem-Elektronik PE unter Verwendung der ersten (Wechsel-)Spannung (Parameter-)Meßwerte für wenigstens einen Parameter nämlicher (Wechsel-)Spannung, insb. eine Amplitude (Spannungshöhe), eine Frequenz und/oder einen Phasenwinkel und/oder eine Induktivität der ersten elektrischen Spule und/oder wenigstens einen (Parameter-)Meßwert für wenigstens einen (Signal-)Parameter, insb. eine Spannungshöhe, eine Stromstärke oder eine Frequenz, eines mittels der Meßsystem-Elektronik ME in die erste elektrische Spule 12 eingespeisten elektrischen (Meßsystem-)Treibersignals ermitteln kann bzw. ermittelt. Darüberhinaus kann die Prüfsystem-Elektronik PE zudem eingerichtet sein, einen oder mehrere der vorbezeichneten (Parameter-)Meßwerte und/oder die ermittelte Induktivität der ersten elektrischen Spule 12 mit einem jeweiligen vorab ermittelten Referenzwert und/oder einem oder mehreren dafür jeweils vorgegebenen Schwellenwerten zu vergleichen. Nicht zuletzt für den vorbezeichneten Fall, daß die Meßsystem-Elektronik ME eingerichtet ist, das erste (Meßsystem-)Treibersignal in die erste elektrische Spule 12 einzuspeisen bzw. das Prüfelement 42 eingerichtet ist, das erste elektrische Prüfsignal zu generieren, kann die Prüfsystem-Elektronik PE ferner im besonderen auch eingerichtet sein, das im Betrieb der Prüfanordnung mittels des ersten (Meßsystem-)Treibersignals generierte erste elektrische Prüfsignal vom ersten Prüfelement 42 abzugreifen und auszuwerten, beispielsweise nämlich unter Verwendung des ersten Prüfsignals eine (Wechsel-)Spannung und/oder einen (Wechsel-)Strom des (Meßsystem-)Treibersignals zu ermitteln und/oder eine Induktivität der ersten elektrischen Spule 12 zu ermitteln. Für den anderen erwähnten Fall, daß die Meßsystem-Elektronik ME eingerichtet ist, das zweite (Meßsystem-)Treibersignal in die zweite elektrische Spule 24 einzuspeisen, kann die Prüfsystem-Elektronik PE ferner entsprechend auch eingerichtet sein, das im Betrieb der Prüfanordnung mittels des zweiten (Meßsystem-)Treibersignals generierte zweite elektrische Prüfsignal vom zweiten Prüfelement 44 abzugreifen und auszuwerten, beispielsweise nämlich unter Verwendung des zweiten Prüfsignals eine (Wechsel-)Spannung und/oder einen (Wechsel-)Strom des zweiten (Meßsystem-)Treibersignals zu ermitteln und/oder eine Induktivität der zweiten elektrischen Spule 24 zu ermitteln. Darüberhinaus kann die Prüfsystem-Elektronik PE ferner eingerichtet sein, die für das jeweilige (Meßsystem-)Treibersignal ermittelten (Wechsel-)Spannungen bzw. (Wechsel-)Ströme und/oder die für die jeweilige Spule des Basis-Moduls ermittelten Induktivitäten jeweils mit einem zugehörigen, beispielsweise nämlich im vorbezeichneten nicht flüchtigen Speicher (EEPROM) vorgehaltenen Referenzwert zu vergleichen.

Um ein zeitnahes und einfaches Abgleichen von die Prüfanordnung bzw. einen Ablauf eines damit durchgeführtes Prüfverfahren steuernden Einstellparameter und/oder Steuerkommandos und/oder von mittels der Prüfanordnung erhobenen Meßdaten zu ermöglichen, insb. auch unmittelbar vor und/oder während eines laufenden Prüfverfahren, sind die Meßsystem-Elektronik und die Prüfsystem-Elektronik nach einer weiteren Ausgestaltung der Erfindung eingerichtet, über eine Datenleitung und/oder per Funk miteinander zu kommunizieren, beispielsweise auch, um im Verbund ein für die Prüfanordnung (vor-)konfektioniertes Prüfprogramm automatisiert und/oder im Dialog mit einem Nutzer der Prüfanordnung ausführen zu können bzw. auszuführen. Alternativ oder in Ergänzung können die Meßsystem-Elektronik und/oder die Prüfsystem-Elektronik auch ausgestaltet sein, in ein, beispielsweise mittels eine Speicherprogrammierbaren Steuerung (SPS), einem Prozeßleitsystem (PLS), einem, ggf. auch mobilen Edge(-Computing)-Device und/oder einem Cloud(-Computing)-System gebildetes, übergeordnetes elektronisches Datenverarbeitungssystem eingebunden werden. Dementsprechend weist die Meßsystem-Elektronik nach einer weiteren Ausgestaltung wenigstens einen Datenausgang zum Ausgeben von, insb. digitalen und/oder mit einem Zeitstempel verknüpften, (Meßsystem-)Daten, beispielsweise nämlich von die Meßsystem-Elektronik charakterisierenden Meß- und/oder Betriebsdaten und/oder das Basis-Modul charakterisierenden Meß- und/oder Betriebsdaten und/oder Meßsystem-Elektronik intern ermittelten Einstellparametern für die Prüfsystem-Elektronik und/oder Meßsystem-Elektronik intern generierten Steuerkommandos für die Prüfsystem-Elektronik, auf. Zudem weist die Prüfsystem-Elektronik entsprechend wenigstens einen Dateneingang zum Empfangen von solchen (Meßsystem-)Daten auf. Zudem kann bei einer so gebildeten Prüfanordnung der Dateneingang der Prüfsystem-Elektronik PE an den Datenausgang der Meßsystem-Elektronik ME angeschlossen sein. Darüberhinaus kann die Meßsystem-Elektronik ME eingerichtet sein, solche (Meßsystem-)Daten via Datenausgang an die Prüfsystem-Elektronik PE zu übermitteln und/oder kann die Prüfsystem-Elektronik PE eingerichtet sein, (Meßsystem-)Daten von der Meßsystem-Elektronik ME zu empfangen und auszuwerten. Alternativ oder in Ergänzung können beispielsweise auch die Prüfsystem-Elektronik PE wenigstens einen Datenausgang zum Ausgeben von, insb. digitalen und/oder mit einem Zeitstempel verknüpfte, (Prüfsystem-)Daten, insb. nämlich von Prüfsystem-Elektronik PE intern ermittelten Meß- und/oder Betriebsdaten und/oder von Prüfsystem-Elektronik PE intern generierten Einstellparameter und/oder Steuerkommandos für die Meßsystem-Elektronik ME, beispielsweise auch ein die Prüfanordnung in Gang setzendes bzw. die Prüfung startendes Start-Kommando und/oder ein die Prüfung beendendes Stop-Kommando, und dementsprechend die Meßsystem-Elektronik ME wenigstens einen Dateneingang zum Empfangen von, insb. digitalen und/oder mit einem Zeitstempel verknüpfte, (Prüfsystem-)Daten, beispielsweise nämlich von Prüfsystem-Elektronik PE intern ermittelten Meß- und/oder Betriebsdaten und/oder von Prüfsystem-Elektronik PE intern generierten Einstellparameter und/oder Steuerkommandos für die Meßsystem-Elektronik, aufweisen. Zudem können bei einer derartigen Prüfanordnung der Dateneingang der Meßsystem-Elektronik an den Datenausgang der Prüfsystem-Elektronik angeschlossen sein. Für den vorbezeichneten Fall, daß die Prüfsystem-Elektronik eine Funkeinheit aufweist, kann ferner auch die Meßsystem-Elektronik eingerichtet sein, (Meßsystem-)Daten per Funk zu senden und/oder zum (Prüfsystem-)Daten per Funk zu empfangen, bzw. kann die Meßsystem-Elektronik mit einer zur Funkeinheit der Prüfsystem-Elektronik kompatiblen Funkeinheit ausgerüstet sein.

Nicht zuletzt für den vorbeschriebenen Fall, daß das Basis-Modul M1 zusammen mit der Meßsystem-Elektronik ME eingerichtet sind, ein Identifizierelement (28) des Vibronik-Moduls M2 auslesen zu können kann das Prüf-Modul zur Vereinfachung der Inbetriebnahme der damit gebildeten Prüfanordnung ferner wenigstens ein mit dem Trägerelement mechanisch verbundenes, insb. nämlich das Prüf-Modul betreffende bzw. identifizierende Informationen tragendes, Identifizierelement 48, mithin z.B. ein Barcode-Etikett, ein QR-Code-Etikett oder ein Funk-Etikett (RFID-TAG), aufweisen und kann zudem die Meßsystem-Elektronik ME auch eingerichtet sein, vom Identifizierelement 48 des Prüf-Moduls PM getragene Informationen aus dem Identifizierelement 48 auszulesen, insb. nämlich auszuwerten, etwa um zu verifizieren, ob das Prüf-Modul PM zum Basis-Modul M1 und/oder zur Meßsystem-Elektronik ME kompatibel bzw. zur Bildung der Prüfanordnung zugelassen ist. Alternativ oder in Ergänzung kann das Prüf-Modul PM zum Übertragen von (Prüfsystem-)Daten an die Meßsystem-Elektronik ME - nicht zuletzt auch für den vorbezeichneten Fall, daß im Basis-Modul M1 wenigstens ein an die Meßsystem-Elektronik ME angeschlossener Fotosensor 19b vorgesehen ist - ferner wenigstens ein mit dem Trägerelement 41 mechanisch verbundenes sowie an die Prüfsystem-Elektronik PE elektrisch angeschlossenes Licht emittierendes Halbleiterelement 49a, beispielsweise eine Leuchtdiode (LED) aufweisen und/oder kann das Prüf-Modul PM zum Empfangen von (Meßsystem-)Daten von der
Meßsystem-Elektronik ME - nicht zuletzt auch für den vorbezeichneten Fall, daß im Basis-Modul M1 wenigstens ein an die Meßsystem-Elektronik ME angeschlossenes Licht emittierendes Halbleiterelement 19a vorgesehen ist - einen oder mehrere mit dem Trägerelement 41 mechanisch verbundene sowie an die Prüfsystem-Elektronik elektrisch angeschlossene Fotosensoren 49b, beispielsweise einen oder mehrere CCD-Fotosensoren und/oder einen oder mehrere CMOS-Fotosensoren, aufweisen.

Das erfindungsgemäße Prüf-Modul PM bzw. das damit gebildete erfindungsgemäße Prüfsystem kann beispielsweise zum Inbetriebnehmen und/oder auch zum, ggf. auch wiederkehrenden (Über-)Prüfen des vibronischen Meßsystems, insb. nämlich auch vor Ort bzw. im Zuge eines Austauschens eines verschlissenen bzw. defekten Vibronik-Moduls gegen ein intaktes neues Vibronik-Modul, verwendet werden, derart, daß mittels des Prüf-Moduls bzw. des Prüfsystems zunächst die jeweilige Prüfanordnung gebildet wird. Dafür wird das Prüf-Modul PM in das (nicht mit einem Vibronik-Modul bestückte) Basis-Modul M1 eingesetzt (Fig. 5), beispielsweise auch nachdem ein zunächst im Basis-Modul M1 eingesetztes Vibronik-Modul M2 aus dem Basis-Modul M2 entfernt worden ist, und entsprechend im Basis-Modul M1 fixiert bzw. arretiert, beispielsweise auch mittels einer ansonsten der Arretierung des Vibronik-Moduls dienlichen Verriegelung. Darüberhinaus können die Prüfsystem-Elektronik PE und die Meßsystem-Elektronik ME, wie auch in Fig. 4 schematisch dargestellt, zur Bildung der Prüfanordnung elektrisch aneinander angeschlossen und/oder (signaltechnisch) miteinander gekoppelt und/oder (datentechnisch) in das vorbezeichnete übergeordnete elektronische Datenverarbeitungssystem eingebunden werden. Anschließend kann ein Überprüfen des Basis-Moduls M1 und/oder der Meßsystem-Elektronik ME mittels des Prüf-Moduls PM bzw. des Prüfsystems erfolgen, beispielsweise durch Vergleichen wenigstens eines mittels der Prüfsystem-Elektronik ermittelten (Parameter-)Meßwerts und/oder wenigstens eines mittels der Meßsystem-Elektronik ermittelten (Parameter-)Meßwerts mit einem jeweils zugehörigen Referenzwert und/oder wenigstens einem dafür vorgegebenen Schwellenwert. Nach Beendigung des Überprüfens kann das Prüf-Modul PM wieder aus dem Basis-Modul M1 entfernt und kann ggf. auch die Prüfsystem-Elektronik PE wieder von der Meßsystem-Elektronik ME getrennt werden. Nicht zuletzt für den Fall, daß durch das Überprüfen die Funktionstüchtigkeit des Basis-Moduls M1 und der Meßsystem-Elektronik ME bestätigt worden ist ("pass"), kann hernach ein Vibronik-Modul M2 zum Bilden eines Meßaufnehmers vom Vibrationstyp bzw. eines vibronischen Meßsystems in das Basis-Modul M1 entsprechend eingesetzt werden. Anderenfalls ("fail") kann dementsprechend sehr rasch ein Auswechseln des defekten Basis-Moduls gegen ein intaktes (neues) Basis-Moduls bzw. der defekten Meßsystem-Elektronik gegen eine intakte (neue) Meßsystem-Elektronik vorgenommen werden.

## Patentansprüche

1. Prüf-Modul für ein Basis-Modul (M1) eines vibronischen Meßsystems, insb. eines modularen Coriolis-Massestrom-Meßgeräts, und/oder eine an das Basis-Modul elektrisch angeschlossene Meßsystem-Elektronik (ME) des vibronischen Meßsystems, welches Prüf-Modul umfaßt:
- ein, insb. monolithisches und/oder plattenförmiges, Trägerelement (41), insb. aus Metall und/oder Kunststoff;
- sowie wenigstens ein mit dem Trägerelement (41) mechanisch verbundenes, insb. elektrisches und/oder magnetisches und/oder elektronisches, erstes Prüfelement (42), insb. eine elektrische Spule und/oder ein Permanentmagnet, zum Erzeugen und/oder Detektieren eines Magnetfelds;
- wobei das Prüf-Modul eingerichtet ist, in das Basis-Modul eingesetzt und damit wieder lösbar mechanisch verbunden zu werden, insb. derart, daß das Prüf-Modul (PM) im Basis-Modul (M1) arretiert ist bzw. nicht beweglich ist und/oder daß das erste Prüfelement (42) innerhalb des Basis-Moduls (M1) an einer ersten vorgegebenen Prüfposition (P1) gehalten ist.

2. Prüf-Modul nach einem der vorherigen Ansprüche, wobei das Prüf-Modul eingerichtet ist, derart in das Basis-Modul eingesetzt und damit wieder lösbar mechanisch verbunden zu werden, daß das erste Prüfelement an einer, insb. bezüglich einer Ausrichtung und/oder eines kleinsten Abstandes einer elektrischen Spule (12) des Basis-Moduls vorgegebenen, ersten Prüfposition gehalten ist, insb. derart, daß eine gedachte Längsachse des ersten Prüfelements und eine gedachte Längsachse einer elektrischen Spule (12) des Basis-Moduls miteinander fluchten bzw. in Verlängerung zueinander parallel verlaufen.

3. Prüf-Modul nach einem der vorherigen Ansprüche,
- wobei das erste Prüfelement (14) eine, insb. zylindrische und/oder als Luftspule ausgebildete, elektrische Spule aufweist; und/oder
- wobei das erste Prüfelement einen Permanentmagneten aufweist; und/oder
- wobei das erste Prüfelement einen Hall-Sensor, insb. einen CMOS-Hall-Sensor, aufweist; und/oder
- wobei das erste Prüfelement eingerichtet ist, mittels eines eingespeisten zeitlich veränderlichen elektrischen Treibersignals, insb. mit einer eingeprägten Wechselspannung oder einem eingeprägten Wechselstrom, ein (Prüf-)Magnetfeld mit zeitlich veränderlicher magnetischer Feldstärke bzw. zeitlich veränderlicher magnetischer Flußdichte zu erzeugen; und/oder
- wobei das erste Prüfelement eingerichtet ist, mittels eines mit dem ersten Prüfelement wechselwirkenden Magnetfelds mit zeitlich veränderlicher magnetischer Feldstärke bzw. zeitlich veränderlicher magnetischer Flußdichte ein zeitlich veränderliches elektrisches Prüfsignal, insb. mit einer von einer vom Magnetfeld abhängigen Wechselspannung und/oder einem vom Magnetfeld abhängigen Wechselstrom, zu erzeugen.

4. Prüf-Modul nach einem der vorherigen Ansprüche,
- weiters umfassend: wenigstens einen mit dem Trägerelement (41) mechanisch verbundenen, insb. vom ersten Prüfelement beabstandeten, Umweltsensor (47), insb. ein Schallempfänger (Mikrofon), ein Temperatursensor, ein (Mikro-)bolometer, eine Thermosäule, ein Feuchtesensor, ein Strahlungsdetektor bzw. eine Antenne, zum Erfassen wenigstens einer physikalischen Umwelt-Meßgröße innerhalb des Basis-Moduls, insb. von sich innerhalb des Basis-Moduls ausbreitender multi- und/oder hoch-frequenter elektromagnetischer (Stör-)Strahlung (EMV), von sich innerhalb des Basis-Moduls ausbreitenden Schallwellen, einer sich innerhalb des Basis-Moduls ausbreitenden thermischen Strahlung, einer Temperatur innerhalb des Basis-Moduls oder einer Feuchte innerhalb des Basis-Moduls, und zum Wandeln nämlicher (erfaßter) Umwelt-Meßgröße in ein Umwelt-Meßsignal; und/oder
- weiters umfassend: wenigstens ein mit dem Trägerelement (41) mechanisch verbundenes, insb. nämlich das Prüf-Modul (PM) betreffende bzw. identifizierende Informationen tragendes, Identifizierelement (48), insb. ein Barcode-Etikett, ein QR-Code-Etikett oder ein Funk-Etikett (RFID-TAG); und/oder
- weiters umfassend: wenigstens ein mit dem Trägerelement (41) mechanisch verbundenes Licht emittierendes Halbleiterelement (49a), insb. eine Leuchtdiode (LED); und/oder
- weiters umfassend: einen oder mehrere mit dem Trägerelement (41) mechanisch verbundene Fotosensoren (49b), insb. einen oder mehrere CCD-Fotosensoren und/oder einen oder mehrere CMOS-Fotosensoren; und/oder
- weiters umfassend: wenigstens ein mit dem Trägerelement (41) mechanisch verbundenes, insb. zum ersten Prüfelement (42) baugleiches und/oder zum ersten Prüfelement funktionsgleiches und/oder vom ersten Prüfelement beabstandetes, zweites Prüfelement (44) zum Erzeugen und/oder Detektieren eines Magnetfelds.

5. Prüf-Modul nach einem der vorherigen Ansprüche, wobei das Trägerelement zumindest teilweise aus einem, insb. chemisch beständigen und/oder hochfesten, Kunststoff, insb. einem Polycarbonat (PC) oder einem PolyEtherEtherKeton (PEEK), hergestellt ist, insb. nämlich eine aus Kunststoff hergestellte äußere Schutzschicht aufweist.

6. Prüf-Modul nach dem vorherigen Anspruch, wobei zumindest das erste Prüfelement (42) zumindest teilweise, insb. nämlich vollständig, in den Kunststoff eingebettet ist.

7. Prüf-Modul nach einem der vorherigen Ansprüche,
- wobei das Basis-Modul (M1)
-- ein (Schutz-)Gehäuse (11) mit wenigstens einer von einer Gehäusewand (11+) zumindest teilweise umhüllten Kammer (11*)
-- sowie wenigstens eine innerhalb der Kammer (11*) des (Schutz-)Gehäuses (11) plazierte, insb. zylindrische und/oder elektrisch an die Meßsystem-Elektronik (ME) angeschlossene, erste elektrische Spule (12), die mit der Gehäusewand (11+) zumindest mittelbar mechanisch verbunden ist, aufweist;
- und wobei das Prüf-Modul eingerichtet ist, derart in das Basis-Modul eingesetzt und damit wieder lösbar mechanisch verbunden zu werden, daß das Trägerelement und das erste Prüfelement innerhalb der Kammer plaziert sind, insb. derart, daß das erste Prüfelement an einer bezüglich einer Ausrichtung und/oder eines kleinsten Abstandes zur ersten elektrische Spule (12) vorgegebenen ersten Prüfposition (P1) gehalten ist, und/oder daß eine gedachte Längsachse des ersten Prüfelements und eine gedachte Längsachse der ersten elektrischen Spule (12) miteinander fluchten bzw. in Verlängerung zueinander parallel verlaufen.

8. Prüf-Modul nach einem der vorherigen Ansprüche, eingesetzt in ein Basis-Modul eines vibronischen Meßsystems.

9. Verwenden eines Prüf-Moduls (PM) nach einem der vorherigen Ansprüche zum Überprüfen eines Basis-Modul (M1) eines vibronischen Meßsystems, insb. eines modularen Coriolis-Massestrom-Meßgeräts, und/oder einer an das Basis-Modul (M1) elektrisch angeschlossenen, insb. modularen, Meßsystem-Elektronik (ME) des vibronischen Meßsystems.

10. Prüfanordnung, umfassend:
- ein Prüfmodul nach einem der Ansprüche 1 bis 8;
- ein Basis-Modul (M1) eines vibronisches Meßsystems, insb. eines modularen Coriolis-Massestrom-Meßgeräts;
- sowie eine Meßsystem-Elektronik (ME) des vibronisches Meßsystems;
- wobei das Basis-Modul (M1)
-- ein (Schutz-)Gehäuse (11) mit wenigstens einer von einer Gehäusewand (11+) zumindest teilweise umhüllten Kammer (11*)
-- sowie wenigstens eine innerhalb der Kammer (11 *) des (Schutz-)Gehäuses plazierte, insb. zylindrische und/oder elektrisch an die Meßsystem-Elektronik (ME) angeschlossene, erste elektrische Spule (12), die mit der Gehäusewand (11+) zumindest mittelbar mechanisch verbunden ist, aufweist;
- und wobei das Prüf-Modul (PM) in das Basis-Modul (M1) eingesetzt ist und damit mechanisch fest, gleichwohl wieder lösbar verbunden ist, derart, daß das Trägerelement (41) und das erste Prüfelement (42) innerhalb der Kammer (11 *) plaziert sind, insb. derart, daß das Prüf-Modul im Basis-Modul arretiert ist bzw. nicht beweglich ist und/oder daß das erste Prüfelement (42) an einer bezüglich einer Ausrichtung und/oder eines kleinsten Abstandes zur ersten elektrische Spule (12) vorgegebenen ersten Prüfposition gehalten ist.

11. Prüfanordnung nach einem der vorherigen Ansprüche, wobei die Meßsystem-Elektronik eingerichtet ist, mittels eines (ersten) elektrischen (Meßsystem-)Treibersignals, insb. mit einem eingeprägten Wechselstrom, elektrische Leistung in die erste elektrische Spule einzuspeisen.

12. Prüfanordnung nach einem der vorherigen Ansprüche, wobei das Basis-Modul (M1) eingerichtet ist, ein Vibronik-Modul (M2) des Meßsystems aufzunehmen und damit mechanisch fest, gleichwohl wieder lösbar verbunden zu werden, insb. nämlich unter Bildung eines Meßaufnehmers vom Vibrationstyp bzw. eines vibronischen Meßsystems und/oder derart, daß das Vibronik-Modul (M2) im Basis-Modul (M1) arretiert ist bzw. nicht beweglich ist.

13. Prüfanordnung nach dem vorherigen Anspruch,
- wobei das Prüf-Modul (PM) eingerichtet ist, insb. gleichermaßen wie das Vibronik-Modul (M2), in das Basis-Modul (M1) eingebaut, insb. nämlich von außerhalb des Gehäuses (11) und/oder durch eine in der Gehäusewand (11+) vorgesehene (Einschub-)Öffnung des (Schutz-)Gehäuses (11) eingesetzt, zu werden;
- wobei das Basis-Modul (M1) eingerichtet ist, das Vibronik-Modul (M2) aufzunehmen, falls das Prüf-Modul nicht in das Basis-Modul eingesetzt ist; und/oder
- wobei das Basis-Modul (M1) eingerichtet ist, das Prüf-Modul (PM) aufzunehmen, falls das Vibronik-Modul (M2) nicht in das Basis-Modul eingesetzt ist; und/oder
- wobei das Vibronik-Modul (M2) und das Basis-Modul (M1) eingerichtet sind, werkzeuglos zusammengebaut zu werden; und/oder
- wobei das Prüf-Modul (PM) und das Basis-Modul (M1) eingerichtet sind, werkzeuglos zusammengebaut zu werden; und/oder
- wobei das Vibronik-Modul (M2) austauschbar ausgebildet ist, derart, daß es von außerhalb des (Schutz-)Gehäuses des Basis-Moduls (M1) und/oder durch eine in der Gehäusewand (11+) vorgesehene (Einschub-)Öffnung des (Schutz-)Gehäuses (11) in die Kammer (11*) gebracht werden kann und daß es aus dem Basis-Modul (M1), insb. zerstörungsfrei und/oder werkzeuglos, wieder ausgebaut werden kann, insb. nämlich von außerhalb des Gehäuses (11) und/oder durch die (Einschub-)Öffnung des (Schutz-)Gehäuses (11) herausnehmbar ist.

14. Prüfanordnung nach einem der Ansprüche 12 bis 13,
- wobei das Vibronik-Modul (M2) des Meßsystems wenigstens ein, insb. zumindest abschnittsweise gerades und/oder zumindest abschnittsweise gebogenes, (erstes) Rohr (31)
-- mit einer eine äußere Mantelfläche des Rohrs bildenden Rohrwandung, insb. aus einem Metall oder einem Kunststoff,
-- und mit einem von nämlicher Rohrwandung umhüllten Lumen, aufweist;
- und wobei das Vibronik-Modul (M2) eingerichtet ist, insb. werkzeuglos, so in das (Schutz-)Gehäuse (11) eingebaut zu werden, daß das (erste) Rohr (31) zumindest teilweise, insb. vollständig, innerhalb der Kammer plaziert, gleichwohl von der Gehäusewand (11+) beabstandet ist.

15. Verfahren zum Inbetriebnehmen und/oder (Über-)Prüfen eines vibronischen Meßsystems, insb. eines modularen Coriolis-Massestrom-Meßgeräts,
- welches Meßsystem
- ein Basis-Modul, das
-- ein (Schutz-)Gehäuse (11) mit wenigstens einer von einer Gehäusewand (11+) zumindest teilweise umhüllten Kammer (11*)
-- sowie wenigstens eine innerhalb der Kammer (11*) des (Schutz-)Gehäuses plazierte, insb. zylindrische und/oder als Luftspule ausgebildete, erste elektrische Spule (12), die mit der Gehäusewand (11+) zumindest mittelbar mechanisch verbunden sowie elektrisch an die Meßsystem-Elektronik angeschlossene ist, aufweist,
- sowie ein Vibronik-Modul, insb. ein Vibronik-Modul gemäß einem der Ansprüche 12 bis 14, umfaßt;
- wobei das Basis-Modul eingerichtet ist, das Vibronik-Modul aufzunehmen und damit mechanisch fest, gleichwohl wieder lösbar verbunden zu werden, insb. nämlich unter Bildung eines Meßaufnehmers vom Vibrationstyp bzw. eines vibronischen Meßsystems und/oder derart, daß das Vibronik-Modul nicht beweglich ist bzw. im Basis-Modul arretiert ist;
welches Verfahren umfaßt:
- Verwenden eines Prüf-Moduls nach einem der Ansprüche 1 bis 8 zum Bilden einer Prüfanordnung nach einem der Ansprüche 10 bis 14;
- Überprüfen des Basis-Moduls und/oder der Meßsystem-Elektronik mittels des Prüf-Moduls bzw. des Prüfsystems, insb. durch Vergleichen wenigstens eines mittels der Prüfsystem-Elektronik ermittelten Meßwerts und/oder wenigstens eines mittels der Meßsystem-Elektronik ermittelten Meßwerts mit einem jeweils zugehörigen Referenzwert und/oder wenigstens einem dafür vorgegebenen Schwellenwert;
- Entfernen des Prüf-Moduls aus dem Basis-Modul;
- sowie Einsetzen eines Vibronik-Moduls, insb. eines Vibronik-Moduls gemäß einem der Ansprüche 12 bis 14, in das Basis-Modul zum Bilden eines Meßaufnehmers vom Vibrationstyp bzw. des vibronischen Meßsystems.

16. Verfahren nach dem vorherigen Anspruch, wobei das Bilden der Prüfanordnung weiters ein Einsetzen des Prüf-Moduls in das Basis-Modul, insb. nach einem Entfernen eines Vibronik-Moduls aus dem Basis-Modul, umfaßt.
